(19) Europäisches Patentamt
European Patent Office
Office européen des brevets

(11) EP 4 223 848 A1

(12) # EUROPEAN PATENT APPLICATION
published in accordance with Art. 153(4) EPC

(43) Date of publication:
**09.08.2023 Bulletin 2023/32**

(21) Application number: **21875072.7**

(22) Date of filing: **03.09.2021**

(51) International Patent Classification (IPC):
***C09D 175/04*** *(2006.01)* ***C08G 18/22*** *(2006.01)*
***C08G 18/32*** *(2006.01)* ***C08G 18/80*** *(2006.01)*
***C09D 7/61*** *(2018.01)* ***C09D 7/65*** *(2018.01)*

(52) Cooperative Patent Classification (CPC):
**C08G 18/22; C08G 18/32; C08G 18/80; C09D 7/61; C09D 7/65; C09D 175/04**

(86) International application number:
**PCT/JP2021/032462**

(87) International publication number:
**WO 2022/070770 (07.04.2022 Gazette 2022/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2020 JP 2020164749**

(71) Applicant: **Asahi Kasei Kabushiki Kaisha**
**Tokyo 1000006 (JP)**

(72) Inventors:
- **YAMAUCHI Masakazu**
  **Tokyo 100-0006 (JP)**
- **YOSHINUMA Tomoharu**
  **Tokyo 100-0006 (JP)**

(74) Representative: **Strehl Schübel-Hopf & Partner**
**Maximilianstrasse 54**
**80538 München (DE)**

(54) **POLYURETHANE-BASED HARDENER AND USE THEREOF**

(57) Provided are: a polyurethane hardener comprising a first polyisocyanate and a thermally latent catalyst encapsulated by covering with a polyurea film derived from both a polyamine compound and a second polyisocyanate; a coating composition comprising the polyurethane hardener and a polyvalent active-hydrogen compound; and a coating film obtained by solidifying the coating composition.

EP 4 223 848 A1

## Description

TECHNICAL FIELD

The present invention relates to a polyurethane-based hardener and the use thereof. Specifically, the present invention relates to a polyurethane-based hardener, an encapsulated thermally-latent catalyst, a method for producing the encapsulated thermally-latent catalyst, a kit of a two-liquid type coating composition, a solvent-based one-liquid type coating composition, an aqueous one-liquid type coating composition, a coating film and a coated article.

The present invention claims priority on the basis of Japanese Patent Application No. 2020-164749 filed in Japan on September 30, 2020, the contents of which are incorporated herein by reference.

BACKGROUND OF THE INVENTION

A polyurethane resin coating material conventionally has superior wear resistance, chemical resistance and stain resistance. In particular, a polyurethane resin coating material using a polyisocyanates obtained from aliphatic diisocyanates or alicyclic diisocyanates has further excellent weather resistance, and the demand therefor has tended to increase.

However, it is known that a polyurethane resin coating material is generally a two-liquid type, and there is a trade-off relationship between the crosslinkability after coating and drying and the storage stability after blending the coating material.

Therefore, in general, the storage stability of the polyurethane resin coating material having excellent crosslinkability after coating and drying is deteriorated, whilst the crosslinkability after drying of the polyurethane resin coating material having excellent storage stability is deteriorated.

Examples of a technique for breaking the relationship between the crosslinkability after drying and the storage stability after blending the coating material include a technique including a thermally latent catalyst which is considered to exhibit catalytic activity due to the change in the organic metal complex structure by heat (see, for example, Patent Document 1) and a technique using a photolatent catalyst (see, for example, Patent Document 2).

Furthermore, a blocked polyisocyanate in which a polyisocyanate is blocked with a blocking agent has been proposed as a technique for improving the storage stability, which is a defect of the two-liquid type polyurethane resin coating material. The blocked polyisocyanate does not react with polyols at room temperature. However, a blocking agent is dissociated by conducting heating, and then active isocyanate groups are regenerated to react with the polyols, thereby causing a cross-linking reaction, as a result of which the storage stability can be improved. Therefore, many blocking agents have been studied, and typical examples of the blocking agent include phenol, methyl ethyl ketooxime, and 3,5-dimerpyrazole.

Furthermore, studies in which a metal catalyst is added to a blocked polyisocyanate composition to enhance the catalytic activity as compared with the case where no metal catalyst is added have been conducted (see, for example, Patent Document 3).

Alternatively, a technique in which an inclusion is covered with an outer film such as gelatin to control the release of a drug in the inclusion has been developed (see, for example, Patent Document 4).

DOCUMENTS OF RELATED ART

Patent Documents

Patent Document 1: WO 2017/182429
Patent Document 2: Japanese Patent Publication No. 5894919
Patent Document 3: Japanese Patent Publication No. 6165152
Patent Document 4: Japanese Patent Publication No. 6404826

SUMMARY OF THE INVENTION

PROBLEMS TO BE SOLVED BY THE INVENTION

However, there is a case in which the storage stability is insufficient in the system in which the metal catalyst is added to the blocked polyisocyanate composition as described in Patent Document 3, because the catalytic activity is also exhibited in the coating material.

The present invention has been made in view of the above-mentioned circumstances, and provides a polyurethane-based hardener that can provide a coating composition having excellent storage stability and low-temperature curability and can form a coating film having excellent scratch resistance. Furthermore, a kit of a two-liquid type coating composition, a solvent-based one-liquid type coating composition, an aqueous one-liquid type coating composition, a coating film and a coated article, using the polyurethane-based hardener, are provided.

MEANS TO SOLVE THE PROBLEMS

The present invention includes the following aspects.

(1) A polyurethane-based hardener including:

a polyisocyanate (first polyisocyanate); and
an encapsulated thermally-latent catalyst coated with a polyurea film derived from a polyamine compound and a polyisocyanate (second polyisocyanate).

(2) The polyurethane-based hardener according to (1) mentioned above, including:

the polyisocyanate (first polyisocyanate); and
the encapsulated thermally-latent catalyst consisting of a metal compound coated with the polyurea film derived from the polyamine compound and the polyisocyanate (second polyisocyanate).

(3) The polyurethane-based hardener according to (1) or (2) mentioned above, wherein the first polyisocyanate is a blocked polyisocyanate derived from a polyisocyanate and a blocking agent.
(4) The polyurethane-based hardener according to (1) or (2) mentioned above, wherein the first polyisocyanate is a hydrophilic blocked polyisocyanate derived from a polyisocyanate, a hydrophilic compound and a blocking agent.
(5) A kit of a two-liquid type coating composition, including: the polyurethane-based hardener of (1) or (2) mentioned above; and a polyvalent active hydrogen-containing compound.
(6) A solvent-based one-liquid type coating composition, including: the polyurethane-based hardener of (3) mentioned above; and a polyvalent active hydrogen-containing compound.
(7) An aqueous one-liquid type coating composition, including: the polyurethane-based hardener of (4) mentioned above; and a polyvalent active hydrogen-containing compound.
(8) A coating film formed by curing a two-liquid type coating composition, including: the polyurethane-based hardener of (1) or (2) mentioned above; and a polyvalent active hydrogen-containing compound.
(9) A coating film formed by curing the solvent-based one-liquid type coating composition of (6) mentioned above.
(10) A coating film formed by curing the aqueous one-liquid type coating composition of (7) mentioned above.
(11) A coated article including the coating film of any one of (8) to (10) mentioned above.
(12) An encapsulated thermally-latent catalyst coated with a polyurea film derived from a polyamine compound and a polyisocyanate (second polyisocyanate).
(13) The encapsulated thermally-latent catalyst according to (12) mentioned above, wherein the encapsulated thermally-latent catalyst consists of a metal compound coated with the polyurea film derived from the polyamine compound and the polyisocyanate (second polyisocyanate).
(14) The encapsulated thermally-latent catalyst according to (12) or (13) mentioned above, wherein the second polyisocyanate is a water-dispersible polyisocyanate.
(15) A method for producing an encapsulated thermally-latent catalyst, including:

a step in which a mixture is prepared by mixing a polyamine compound and a metal compound;
a step in which a dispersion liquid is prepared by dispersing the mixture in water; and
a step in which a water-dispersible polyisocyanate is added dropwise into the dispersion liquid to form a polyurea film derived from the polyamine compound and the water-dispersible polyisocyanate by an interfacial polymerization method to coat the metal compound with the polyurea film.

EFFECTS OF THE INVENTION

The polyurethane-based hardener of the above-mentioned aspects makes it possible to provide a coating composition having excellent storage stability and low-temperature curability and a coating film having excellent scratch resistance.

EMBODIMENTS FOR CARRYING OUT THE INVENTION

Hereinafter, an embodiment in which the present invention is carried out (hereinafter, simply referred to as "present embodiment") will be described in detail. The following embodiments are examples which explain the present invention, and are not intended to limit the present invention. The present invention may be appropriately modified to be carried out within the scope of the gist thereof.

In the present specification, the term "polyol" means a compound having at least two hydroxyl groups (-OH).

In the present specification, the term "polyisocyanate" means a reactant in which a plurality of monomeric compounds each having at least one isocyanate group (-NCO) (hereinafter, abbreviated as "isocyanate monomer") is bonded.

«Polyurethane-based hardener»

The polyurethane-based hardener of the present embodiment includes: a polyisocyanate (first polyisocyanate); and an encapsulated thermally-latent catalyst coated with a polyurea film derived from a polyamine compound and a polyisocyanate (second polyisocyanate).

The first polyisocyanate may be a blocked polyisocyanate derived from a polyisocyanate and a blocking agent, or may be a blocked polyisocyanate derived from a polyisocyanate, a hydrophilic compound and a blocking agent.

The amount ratio of the first polyisocyanate to the encapsulated thermally-latent catalyst in the polyurethane-based hardener, each solid content of which being 100% by mass, (first polyisocyanate: encapsulated thermally-latent catalyst) (mass ratio) is preferably 99: 1 to 70:30, more preferably 98:2 to 75:25, and even more preferably 96: 4 to 80:20. When the amount ratio is within the above-mentioned range, there is a tendency in which the curability at low-temperature baking is favorable and the external appearance of the coating film is kept smooth.

<Polyisocyanate (first polyisocyanate)>

The polyisocyanate (first polyisocyanate) of the present embodiment may not only be a polyisocyanate, but also a blocked polyisocyanate derived from a polyisocyanate and a blocking agent, or a hydrophilic blocked polyisocyanate derived from a polyisocyanate, a hydrophilic compound and a blocking agent.

<Polyisocyanate>

The polyisocyanate of the present embodiment is a reactant obtained by reacting a plurality of isocyanate monomers.

The diisocyanate monomer preferably has 4 to 30 carbon atoms. Specific examples of the isocyanate monomers include the following. One of these diisocyanate monomers may be used alone, or at least two thereof may be used in combination.

(1) Aromatic diisocyanates such as diphenylmethane-4,4'-diisocyanate (hereinafter, may be referred to as "MDI"), 1,5-naphthalene diisocyanate, tollylene diisocyanate (hereinafter, may be referred to as "TDI"), xylylene diisocyanate, and m-tetramethylxylylene diisocyanate (hereinafter, may be referred to as "TMXDI").
(2) Aliphatic diisocyanates such as 1,4-tetramethylene diisocyanate, 1,6-hexamethylene diisocyanate (hereinafter, may be referred to as "HDI"), 2,2,4-trimethyl-1,6-diisocyanatohexane, 2,4,4-trimethyl-1,6-hexamethylene diisocyanate, 2-methylpentane-1,5-diisocyanate (hereinafter, may be referred to as "MPD1"), and lysine diisocyanate (hereinafter, may be referred to as "LD1").
(3) Alicyclic diisocyanates such as isophorone diisocyanate (hereinafter, may be referred to as "IPDI"), 1,3-bis(diisocyanatemethyl)cyclohexane, 4,4'-dicyclohexylmethane diisocyanate, diisocyanate norbornane, and di(isocyanatemethyl)norbornane.
(4) Triisocyanates such as 4-isocyanatemethyl-1,8-octamethylene diisocyanate (hereinafter, may be referred to as "NT1"), 1,3,6-hexamethylene triisocyanate (hereinafter, may be referred to as "HTI"), bis(2-isocyanatoethyl) 2-isocyanatoglutarate (hereinafter, may be referred to as "GTI"), and lysine triisocyanate (hereinafter, may be referred to as "LTI").

Among them, at least one diisocyanate selected from the group consisting of aliphatic diisocyanates and alicyclic diisocyanates is preferable as the isocyanate monomer, since the weather resistance of the resultant coating film becomes favorable. Furthermore, HDI or IPDI is more preferable as the isocyanate monomer from the viewpoint of ease of industrial availability.

As the isocyanate monomer, one of the aliphatic diisocyanate and the alicyclic diisocyanate may be used alone,

or the aliphatic diisocyanate and the alicyclic diisocyanate may be used in combination. Among these, it is preferable to use the aliphatic diisocyanate alone, or to use the aliphatic diisocyanate and the alicyclic diisocyanate in combination, and it is more preferable to use HDI alone or a combination of HDI and 1PD1. The use of the aliphatic diisocyanate and the alicyclic diisocyanate in combination makes it possible to further improve the toughness and elasticity of the resultant coating film.

When an aliphatic diisocyanate and an alicyclic diisocyanate are used in combination in a polyisocyanate, the mass ratio of the constitution unit derived from the aliphatic diisocyanate to the constitution unit derived from the alicyclic diisocyanate is preferably 50/50 to 95/5, more preferably 60/40 to 90/10, and even more preferably 70/30 to 80/20.

When the mass ratio of the constitution unit derived from the aliphatic diisocyanate to the constitution unit derived from the alicyclic diisocyanate is the above-mentioned lower limit or more, it is possible to further effectively suppress the deterioration of the flexibility of the resultant coating film. In contrast, when the mass ratio of the constitution unit derived from the aliphatic diisocyanate to the constitution unit derived from the alicyclic diisocyanate is the above-mentioned upper limit or less, it is possible to further improve the hardness of the resultant coating film.

The mass ratio of the constitution unit derived from the aliphatic diisocyanate to the constitution unit derived from the alicyclic diisocyanate can be determined by the following method. First, the mass of unreacted aliphatic diisocyanate and the mass of unreacted alicyclic diisocyanate are calculated from the mass of unreacted diisocyanate after reaction and the aliphatic diisocyanate concentration and the alicyclic diisocyanate concentration in the unreacted diisocyanate determined by gas chromatography analysis. Then, the mass of unreacted aliphatic diisocyanate and the mass of unreacted alicyclic diisocyanate, determined by the above-mentioned calculation, are subtracted from the mass of charged aliphatic diisocyanate and the mass of charged alicyclic diisocyanate, respectively, to obtain differences as the mass of the constitution unit derived from the aliphatic diisocyanate and the mass of the constitution unit derived from the alicyclic diisocyanate, respectively. Then, the mass of the constitution unit derived from the aliphatic diisocyanate is divided by the mass of the constitution unit derived from the alicyclic diisocyanate to obtain the mass ratio of the constitution unit derived from the aliphatic diisocyanates to the constitution unit derived from the alicyclic diisocyanates.

Although specific examples of the polyisocyanate derived from the isocyanate monomers include the following (1) to (8), the polyisocyanate is not limited thereto.

(1) A polyisocyanate compound having a uretdione structure obtained by cyclizing and dimerizing two isocyanate groups.
(2) A polyisocyanate compound having an isocyanurate structure or an iminooxadiazinedione structure obtained by cyclizing and trimerizing three isocyanate groups.
(3) A polyisocyanate compound having a biuret structure obtained by reacting three isocyanate groups with one water molecule.
(4) A polyisocyanate compound having an oxadiazinetrione structure obtained by reacting two isocyanate groups with one molecule of carbon dioxide.
(5) A polyisocyanate compound having a plurality of urethane groups obtained by reacting one isocyanate group with one hydroxyl group.
(6) A polyisocyanate compound having an allophanate structure obtained by reacting two isocyanate groups with one hydroxyl group.
(7) A polyisocyanate compound having an acylurea group obtained by reacting one isocyanate group with one carboxy group.
(8) A polyisocyanate compound having a urea structure obtained by reacting one isocyanate group with one primary or secondary amine.

Namely, in addition to the polyisocyanates derived from the above-mentioned isocyanate monomers, examples of the polyisocyanate include polyisocyanates which are reactants obtained by reacting a plurality of isocyanate monomers with a compound other than the above-mentioned isocyanate monomers (such as alcohol, water, or amine).

[Method for producing polyisocyanate]

The method for producing the polyisocyanate will be described in detail below.

The polyisocyanate may be prepared, for example, by simultaneously conducting an allophanate-forming reaction in which an allophanate group is formed, a uretdione-forming reaction in which a uretdione group is formed, an iminooxadiazidinedione-forming reaction in which an iminooxadiazinedione group is formed, an isocyanurate-forming reaction in which an isocyanurate group is formed, a urethane-forming reaction in which a urethane group is formed, and a biuret-forming reaction in which a biuret group is formed in the presence of an excessive amount of isocyanate monomers, and then removing unreacted isocyanate monomers after the end of the reaction. Namely, the polyisocyanate obtained by the above-mentioned reactions is a reactant in which a plurality of the above-mentioned isocyanate monomers

are bonded and which has at least one selected from the group consisting of an allophanate group, a uretdione group, an iminooxadiazinedione group, an isocyanurate group, a urethane group and a biuret group.

Alternatively, the above-mentioned reactions may be carried out separately, and the obtained polyisocyanates may be mixed at specific ratios.

The above-mentioned reaction is preferably carried out simultaneously to obtain a polyisocyanate from the viewpoint of simplicity of preparation, or is preferably carried out separately, followed by mixing the resultants from the viewpoint that the molar ratio of each functional group can be freely adjusted.

(1) Method for producing allophanate group-containing polyisocyanate

An allophanate group-containing polyisocyanate may be obtained by adding an alcohol to isocyanate monomers and using an allophanate-forming reaction catalyst.

As the alcohol available to form an allophanate group, an alcohol composed of only carbon, hydrogen and oxygen is preferable.

Although the alcohol is not limited to the following specified alcohols, examples thereof include monoalcohols and dialcohols. One of these alcohols may be used alone or at least two thereof may be used in combination.

Examples of the monoalcohols include methanol, ethanol, propanol, butanol, pentanol, hexanol, heptanol, octanol, and nonanol.

Examples of the dialcohols include ethylene glycol, 1,3-butanediol, neopentyl glycol, and 2-ethylhexanediol.

Among them, the alcohol is preferably a monoalcohol, and more preferably a monoalcohol having a molecular weight of 200 or less.

Although the allophanate-forming reaction catalyst is not limited to the following compounds, examples thereof include alkylcarboxylic acid salts of tin, lead, zinc, bismuth, zirconium, or zirconyl.

Examples of the alkylcarboxylic acid salts of tin (organotin compounds) include tin 2-ethylhexanoate and dibutyltin dilaurate.

Examples of the alkylcarboxylic acid salts of lead (organolead compounds) include lead 2-ethylhexanoate.

Examples of the alkylcarboxylic acid salts of zinc (organozinc compounds) include zinc 2-ethylhexanoate.

Examples of the alkylcarboxylic acid salts of bismuth include bismuth 2-ethylhexanoate.

Examples of the alkylcarboxylic acid salts of zirconium include zirconium 2-ethylhexanoate.

Examples of the alkylcarboxylic acid salts of zirconyl include zirconyl 2-ethylhexanoate.

One of these catalysts may be used alone or at least two thereof may be used in combination.

The below-mentioned isocyanurate-forming reaction catalyst may also serve as an allophanate-forming reaction catalyst. In the case where the below-mentioned isocyanurate-forming reaction catalyst is used to allow an allophanate-forming reaction to proceed, an isocyanurate-type polyisocyanate may also be generated naturally.

Among them, it is preferable that the below-mentioned isocyanurate-forming reaction catalyst be used as an allophanate-forming reaction catalyst to allow both the allophanate-forming reaction and the isocyanurate-forming reaction to proceed from the viewpoint of economical productivity.

The lower limit of the used amount of the allophanate-forming reaction catalyst relative to the mass of charged isocyanate monomers is preferably 10 ppm by mass, more preferably 20 ppm by mass, even more preferably 40 ppm by mass, and particularly preferably 80 ppm by mass.

The upper limit of the used amount of the allophanate-forming reaction catalyst relative to the mass of charged isocyanate monomers is preferably 1,000 ppm by mass, more preferably 800 ppm by mass, even more preferably 600 ppm by mass, and particularly preferably 500 ppm by mass.

Namely, the used amount of the allophanate-forming reaction catalyst relative to the mass of charged isocyanate monomers is preferably 10 ppm by mass to 1,000 ppm by mass, more preferably 20 ppm by mass to 800 ppm by mass, even more preferably 40 ppm by mass to 600 ppm by mass, and particularly preferably 80 ppm by mass to 500 ppm by mass.

The lower limit of the allophanate-forming reaction temperature is preferably 40°C, more preferably 60°C, even more preferably 80°C, and particularly preferably 100°C.

The upper limit of the allophanate-forming reaction temperature is preferably 180°C, more preferably 160°C, and even more preferably 140°C.

Namely, the allophanate-forming reaction temperature is preferably 40°C to 180°C, more preferably 60°C to 160°C, even more preferably 80°C to 140°C, and particularly preferably 100°C to 140°C.

In the case where the allophanate-forming reaction temperature is the above-mentioned lower limit or more, the reaction rate can be further improved. In the case where the allophanate-forming reaction temperature is the above-mentioned upper limit or less, the coloration of the polyisocyanate or the like tends to be suppressed further effectively.

(2) Method for producing uretdione group-containing polyisocyanate

In the case where a uretdione group-containing polyisocyanate is obtained from isocyanate monomers, the isocyanate monomers may be multimerized by using a uretdione-forming reaction catalyst or conducting heating to obtain the uretdione group-containing polyisocyanate, for example.
Although the uretdione-forming reaction catalyst is not particularly limited, examples thereof include: tertiary phosphines such as trialkylphosphines, tris(dialkylamino)phosphines, and cycloalkylphosphines; and Lewis acids.
Examples of the trialkylphosphines include tri-n-butylphosphine, and tri-n-octylphosphine.
Examples of the tris(dialkylamino)phosphines include tris-(dimethylamino)phosphine.
Examples of the cycloalkylphosphines include cyclohexyl-di-n-hexylphosphine.
Examples of the Lewis acids include boron trifluoride and zinc chlorate.
Many of the uretdione-forming reaction catalysts can simultaneously promote the isocyanurate-forming reaction.
In the case where the uretdione-forming reaction catalyst is used, it is preferable that a deactivator against the uretdione-forming reaction catalyst, such as phosphoric acid or methyl paratoluene sulfonate, be added to terminate the uretdione-forming reaction when a predetermined yield is obtained.
In the case where a uretdione group-containing polyisocyanate is obtained by heating at least one diisocyanate selected from the group consisting of the above-mentioned aliphatic diisocyanates and the above-mentioned alicyclic diisocyanates without using the uretdione-forming reaction catalyst, the heating temperature is preferably 120°C or more, and more preferably 150°C to 170°C. The heating time is preferably 1 hour to 4 hours.

(3) Method for producing iminooxadiazinedione group-containing polyisocyanate

In the case where an iminooxadiazinedione group-containing polyisocyanate is obtained from isocyanate monomers, an iminooxadiazinedione-forming reaction catalyst is generally used.
Examples of the iminooxadiazinedione-forming catalyst include the following compounds 1) and 2).

1) (Poly)fluorohydrogens of general formula: M[Fn] or general formula: M [Fn(HF)m] .
In the formulae, m and n are integers satisfying the relationship of m/n>0. M is n-charged cations (mixture) or one or more radicals which are n-valent in total.
2) Compounds each composed of a compound of general formula: $R^1$-CR'$_2$-C(O)O- or general formula: $R^2$=CR'-C(O)O- and either a quaternary ammonium cation or a quaternary phosphonium cation.

In the formulae, $R^1$ and $R^2$ are each independently a linear, branched, of cyclic saturated or unsaturated perfluoroalkyl group having 1 to 30 carbon atoms. A plurality of R' is each independently selected from the group consisting of a hydrogen atom, and, alkyl groups having 1 to 20 carbon atoms and aryl groups which may contain a hetero atom.
Specific examples of the compounds 1) ((poly)fluorohydrogens) include tetramethylammonium fluoride hydrate and tetraethylammonium fluoride.
Specific examples of the compounds 2) include 3,3,3-trifluorocarboxylic acid, 4,4,4,3,3-pentafluorobutanoic acid, 5,5,5,4,4,3,3-heptafluoropentanoic acid, and 3,3-difluoroprop-2-enoic acid.
Among them, as the iminooxadiazinedione-forming reaction catalyst, the compounds 1) are preferable from the viewpoint of ease of availability, and the compounds 2) are preferable from the viewpoint of safety.
Although the lower limit of the used amount of the iminooxadiazinedione-forming catalyst is not particularly limited, the lower limit relative to the mass of charged isocyanate monomers, indicated by mass ratio, is preferably 5 ppm, more preferably 10 ppm, and even more preferably 20 ppm, from the viewpoint of reactivity.
The upper limit of the used amount of the iminooxadiazinedione-forming catalyst relative to the mass of charged isocyanate monomers, indicated by mass ratio, is preferably 5,000 ppm, more preferably 2,000 ppm, and even more preferably 500 ppm, from the viewpoint of the suppression of coloration and discoloration of the resultant product or the reaction control.
Namely, the used amount of the iminooxadiazinedione-forming catalyst relative to the mass of charged isocyanate monomers, indicated by mass ratio, is preferably 5 ppm to 5,000 ppm, more preferably 10 ppm to 2,000 ppm, and even more preferably 20 ppm to 500 ppm.
Although the lower limit of the iminooxadiazinedione-forming reaction temperature is not particularly limited, the lower limit is preferably 40°C, more preferably 50°C, and even more preferably 60°C, from the viewpoint of the reaction rate.
The upper limit of the iminooxadiazinedione-forming reaction temperature is preferably 150°C, more preferably 120°C, and even more preferably 110°C from the viewpoint of the suppression of the coloration and the discoloration of the reactant product.

Namely, the iminooxadiazinedione-forming reaction temperature is preferably 40°C to 150°C, more preferably 50°C to 120°C, and even more preferably 60°C to 110°C.

The iminooxadiazinedione-forming reaction may be terminated when the predetermined amount of iminooxadiazinedione groups is obtained. The iminooxadiazinedione-forming reaction may be terminated, for example, by adding an acidic compound to a reaction liquid. Examples of the acidic compound include phosphoric acid, acidic phosphoric acid ester, sulfuric acid, hydrochloric acid, and sulfonic acid compounds. Thus, an iminooxadiazinedione-forming reaction catalyst is neutralized or inactivated by thermal decomposition, chemical decomposition or the like. After the reaction is terminated, filtration is conducted, if needed.

(4) Method for producing isocyanurate group-containing polyisocyanate

As a catalyst used to obtain an isocyanurate group-containing polyisocyanate from isocyanate monomers, a generally used isocyanurate-forming reaction catalyst may be used.

Although the isocyanurate-forming reaction catalyst is not particularly limited, a basic catalyst is generally preferable. Specific examples of the isocyanurate-forming reaction catalyst include the following compounds.

1) Hydroxides of tetraalkylammoniums such as tetramethylammonium, tetraethylammonium, or tetrabutylammonium; and organic weak acid salts, such as acetic acid salts, propionic acid salts, octylic acid salts, capric acid salts, myristic acid salts, or benzoic acid salts, of the tetraalkylammonium.
2) Hydroxides of aryl trialkylammoniums such as benzyltrimethylammonium or trimethylphenylammonium; and organic weak acid salts, such as acetic acid salts, propionic acid salts, octylic acid salts, capric acid salts, myristic acid salts, of benzoic acid salts, of the aryl trialkylammoniums.
3) Hydroxides of hydroxyalkylammoniums such as trimethylhydroxyethylammonium, trimethylhydroxypropylammonium, triethylhydroxyethylammonium, or triethylhydroxypropylammonium; and organic weak acid salts, such as acetic acid salts, propionic acid salts, octylic acid salts, capric acid salts, myristic acid salts, or benzoic acid salts, of the hydroxyalkylammoniums.
4) Metal salts, such as tin salts, zinc salts, or lead salts, of alkylcarboxylic acids such as acetic acid, propionic acid, caproic acid, octylic acid, capric acid, or myristic acid.
5) Metal alcoholate such as sodium alcoholate or potassium alcoholate.
6) Aminosilyl group-containing compounds such as hexamethylene disilazane.
7) Mannich bases.
8) Mixtures of tertiary amines and epoxy compounds.
9) Phosphorus-based compounds such as tributylphosphine.

Among them, the isocyanurate-forming reaction catalyst is preferably a hydroxide of quaternary ammonium or an organic weak acid salt of quaternary ammonium, and more preferably a hydroxide of tetraalkylammonium, an organic weak acid salt of tetraalkylammonium, a hydroxide of aryl trialkylammonium, or an organic weak acid salt of aryl trialkylammonium from the viewpoint of unlikely generating unnecessary side-reaction products.

The upper limit of the used amount of the isocyanurate-forming reaction catalyst relative to the mass of charged isocyanate monomers is preferably 1,000 ppm by mass, more preferably 500 ppm by mass, and even more preferably 100 ppm by mass.

In contrast, although the lower limit of the used amount of the isocyanurate-forming reaction catalyst is not particularly limited, the lower limit may be 10 ppm by mass, for example.

The isocyanurate-forming reaction temperature is preferably 50°C to 120°C, and more preferably 60°C to 90°C. In the case where the isocyanurate-forming reaction temperature is the above-mentioned upper limit or less, the coloration of the polyisocyanate or the like tends to be suppressed further effectively.

The isocyanurate-forming reaction is terminated by adding an acidic compound (such as phosphoric acid or acidic phosphoric acid ester) when the predetermined conversion ratio (ratio of the mass of the polyisocyanate produced by the isocyanurate-forming reaction to the mass of charged isocyanate monomers) is obtained.

In order to obtain a polyisocyanate, it is required to stop the progress of the reaction at an initial stage. However, the isocyanurate-forming reaction rate at the initial stage is so rapid that it is difficult to stop the progress of the reaction at the initial stage, and therefore the reaction conditions, especially the addition amount of the catalyst and the addition method thereof, need to be carefully selected. For example, a method of partitioning and adding a catalyst for a constant time period is recommended as a preferred method.

Therefore, the conversion ratio of the isocyanurate-forming reaction to obtain the polyisocyanate is preferably 10% by mass to 60% by mass, more preferably 15% by mass to 55% by mass, and even more preferably 20% by mass to 50% by mass.

In the case where the conversion ratio of the isocyanurate-forming reaction is the above-mentioned upper limit

or less, the viscosity of the blocked polyisocyanate composition including the polyisocyanate can be further decreased. In the case where the conversion ratio of the isocyanurate-forming reaction is the above-mentioned lower limit or more, the procedure of terminating the reaction can be conducted further easily.

A monovalent to hexavalent alcohol may be used in addition to the above-mentioned isocyanate monomers to obtain the isocyanurate group-containing polyisocyanate.

Examples of the available monovalent to hexavalent alcohols include non-polymerizable alcohols, and polymerizable alcohols.

Examples of the non-polymerizable alcohol include monoalcohols and polyvalent alcohols such as diols, triols, and tetraols.

Examples of the monoalcohols include methanol, ethanol, n-propanol, isopropanol, n-butanol, isobutanol, sec-butanol, n-pentanol, n-hexanol, n-octanol, n-nonanol, 2-ethylbutanol, 2,2-dimethylhexanol, 2-ethylhexanol, cyclohexanol, methylcyclohexanol, and ethyl cyclohexanol.

Examples of the diols include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethylhexanediol, 1,2-octanediol, 1,2-decanediol, 2,2,4-trimethyl pentanediol, 2-butyl-2-ethyl-1,3-propanediol, and 2,2-diethyl-1,3-propanediol.

Examples of the triols include glycerin, and trimethylolpropane.

Examples of the tetraols include pentaerythritol.

Although the polymerizable alcohol is not particularly limited, the average number of hydroxyl groups of the polymerizable alcohol is preferably 3 to 8, more preferably 3 to 6, even more preferably 3 to 5, and particularly preferably 3 or 4, for example.

Specific examples of the polymerizable alcohol include polyester polyols, polyether polyols, acrylic polyols, and polyolefin polyols.

The polyester polyol may be obtained, for example, by condensation reaction of one or a mixture of at least two dibasic acids and one or a mixture of at least two polyvalent alcohols.

Examples of the dibasic acid include carboxylic acids such as succinic acid, adipic acid, dimeric acid, maleic anhydride, phthalic anhydride, isophthalic acid, terephthalic acid and 1,4-cyclohexanedicarboxylic acid.

Examples of the polyvalent alcohol include ethylene glycol, propylene glycol, diethylene glycol, 1,4-butanediol, neopentyl glycol, 1,6-hexanediol, trimethylpentanediol, cyclohexanediol, trimethylolpropane, glycerol, pentaerythritol, 2-methylolpropanediol, and ethoxylated trimethylolpropane.

The polyester polyol may be specifically prepared by mixing the above-mentioned components and heating the mixture at about 160°C to 220°C to allow condensation reaction to proceed. Alternatively, polycaprolactones obtained by subjecting lactones such as ε-caprolactone to ring-opening polymerization using the polyvalent alcohol may also be used as the polyester polyol.

The polyester polyol obtained by the above-mentioned production method is preferably modified using an aliphatic diisocyanate, an alicyclic diisocyanate, a compound obtained therefrom, or the like, from the viewpoint of weather resistance and yellowing resistance of the resultant coating film.

The polyether polyol may be obtained by any one of the following methods (1) to (3), for example.

(1) A method of obtaining polyether polyols by random or block addition of either one alkylene oxide or a mixture of alkylene oxides to either one polyvalent hydroxyl-containing compound or a mixture of polyvalent hydroxyl-containing compounds using a catalyst.

Examples of the catalyst include hydroxides of lithium, sodium, or potassium, strong basic catalysts, and composite metal cyanide complexes. Examples of the strong basic catalyst include alcoholates, and alkylamines. Examples of the composite metal cyanide complex include metal porphyrin, and zinc hexacyanocobaltate complexes.

Examples of the alkylene oxide include ethylene oxide, propylene oxide, butylene oxide, cyclohexene oxide, and styrene oxide.

Examples of the polyvalent hydroxyl-containing compound include the following compounds (i) to (vi).

(i) Diglycerin, ditrimethylolpropane, pentaerythritol, and dipentaerythritol.
(ii) Sugar alcohol-based compounds such as erythritol, D-threitol, L-arabinitol, ribitol, xylitol, sorbitol, mannitol, galactitol, and rhamnitol.
(iii) Monosaccharides such as arabinose, ribose, xylose, glucose, mannose, galactose, fructose, sorbose, rhamnose, fucose, and ribodesose.
(IV) Disaccharides such as trehalose, sucrose, maltose, cellobiose, gentiobiose, lactose, and melibiose.
(v) Trisaccharides such as raffinose, gentianose, and melicitose.

(vi) Tetrasaccharides such as stachyose.

(2) A method of obtaining polyether polyols by reacting an alkylene oxide with a polyamine compound.
Examples of the polyamine compound include ethylenediamine.
Examples of the alkylene oxide include the compounds mentioned in the method (1).
(3) A method of obtaining polymer polyols by polymerizing acrylamide using as a medium the polyether polyol obtained by the method (1) or (2).
Although the acrylic polyols are not particularly limited, examples thereof include copolymers of either one ethylenically unsaturated bond-containing monomer having a hydroxyl group or a mixture thereof with either another ethylenically unsaturated bond-containing monomer copolymerizable therewith or a mixture of other ethylenically unsaturated bond-containing monomers copolymerizable therewith.
Although the ethylenically unsaturated bond-containing monomer having a hydroxyl group is not particularly limited, examples thereof include hydroxyethyl acrylate, hydroxypropyl acrylate, hydroxybutyl acrylate, hydroxyethyl methacrylate, hydroxypropyl methacrylate, and hydroxybutyl methacrylate.
Although the other ethylenically unsaturated bond-containing monomer copolymerizable with the ethylenically unsaturated bond-containing monomer having a hydroxyl group is not particularly limited, examples thereof include acrylic esters, methacrylic esters, unsaturated carboxylic acids, unsaturated amides, vinyl-based monomers, and vinyl-based monomers having a hydrolyzable silyl group.
Examples of the acrylic esters include methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.
Examples of the methacrylic esters include methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.
Examples of the unsaturated carboxylic acids include acrylic acid, methacrylic acid, maleic acid, and itaconic acid.
Examples of the unsaturated amides include acrylamide, methacrylamide, N,N-methylene bisacrylamide, diacetone acrylamide, diacetone methacrylamide, maleic acidic amide, and maleimide.
Examples of the vinyl-based monomers include glycidyl methacrylate, styrene, vinyl toluene, vinyl acetate, acrylonitrile, and dibutyl fumarate.
Examples of the vinyl-based monomers having a hydrolyzable silyl group include vinyltrimethoxysilane, vinylmethyldimethoxysilane, and γ-(meth)acryloxypropyltrimethoxysilane.
Examples of the polyolefin polyols include polybutadienes having hydroxyl group terminals, and hydrogenated products thereof.
Among these, the polymerizable alcohol is preferably a polyester polyol, and more preferably a polycaprolactone polyol obtained by ring-opening polymerization of ε-caprolactone using a polyol having a low molecular weight.

(5) Method for producing urethane group-containing polyisocyanate

In the case where a urethane group-containing polyisocyanate is obtained from isocyanate monomers, the urethane group-containing polyisocyanate may be prepared by mixing an excess amount of isocyanate monomers and an alcohol, followed by adding a urethane-forming reaction catalyst thereto, as needed, for example.
Examples of the alcohol include the same alcohols as those which are exemplified in the "Method for producing isocyanurate group-containing polyisocyanate".
Although the urethane-forming reaction catalyst is not particularly limited, examples thereof include tin-based compounds, zinc-based compounds, and amine-based compounds.
The urethane-forming reaction temperature is preferably 50°C to 160°C, and more preferably 60°C to 120°C.
In the case where the urethane-forming reaction temperature is the above-mentioned upper limit or less, the coloration of the polyisocyanate or the like tends to be suppressed further effectively.
The urethane-forming reaction time is preferably 30 minutes to 4 hours, more preferably 1 hour to 3 hours, and even more preferably 1 hour to 2 hours.
The molar ratio of the isocyanate groups of the isocyanate monomers to the hydroxyl groups of the alcohol is preferably 2/1 to 5011. In the case where the molar ratio is the above-mentioned lower limit or more, the viscosity of the polyisocyanate can be further decreased. In the case where the molar ratio is the above-mentioned upper limit or less, the yield of the urethane group-containing polyisocyanate can be further increased.

(6) Method for producing biuret group-containing polyisocyanate

Although a biuret-forming agent to be used to obtain a biuret group-containing polyisocyanate from isocyanate monomers is not particularly limited, examples thereof include water, monovalent tertiary alcohols, formic acid, organic primary monoamines, and organic primary diamines.

The molar amount of isocyanate groups to one mol of the biuret-forming agent is preferably 6 mol or more, more preferably 10 mol or more, and even more preferably 10 mol to 80 mol. In the case where the molar amount of isocyanate groups to one mol of the biuret-forming agent is the above-mentioned lower limit or more, the viscosity of the polyisocyanate is sufficiently decreased. In the case where the molar amount of isocyanate groups to one mol of the biuret-forming agent is the above-mentioned upper limit or less, the curability of the resultant coating composition is further improved.

A solvent may be used to conduct the biuret-forming reaction. The solvent may be any one which allows isocyanate monomers and a biuret-forming agent such as water to be dissolved therein to form a homogeneous phase under reaction conditions.

Specific examples of the solvent include ethylene glycol-based solvents and phosphoric acid-based solvents.

Examples of the ethylene glycol-based solvents include ethylene glycol monomethyl ether acetate, ethylene glycol monoethyl ether acetate, ethylene glycol mono-n-propyl ether acetate, ethylene glycol monoisopropyl ether acetate, ethylene glycol mono-n-butyl ether acetate, ethylene glycol diacetate, ethylene glycol dimethyl ether, ethylene glycol diethyl ether, ethylene glycol di-n-propyl ether, ethylene glycol diisopropyl ether, ethylene glycol di-n-butyl ether, ethylene glycol methylethyl ether, ethylene glycol methylisopropyl ether, ethylene glycol methyl-n-butyl ether, ethylene glycol ethyl-n-propyl ether, ethylene glycol ethylisopropyl ether, ethylene glycol ethyl-n-butyl ether, ethylene glycol n-propyl-n-butyl ether, ethylene glycol isopropyl-n-butyl ether, diethylene glycol monomethyl ether acetate, diethylene glycol monoethyl ether acetate, diethylene glycol mono-n-propyl ether acetate, diethylene glycol monoisopropyl ether acetate, diethylene glycol mono-n-butyl ether acetate, diethylene glycol diacetate, diethylene glycol dimethyl ether, diethylene glycol diethyl ether, diethylene glycol di-n-propyl ether, diethylene glycol diisopropyl ether, diethylene glycol di-n-butyl ether, diethylene glycol methylethyl ether, diethylene glycol methylisopropyl ether, diethylene glycol methyl-n-propyl ether, diethylene glycol methyl-n-butyl ether, diethylene glycol ethylisopropyl ether, diethylene glycol ethyl-n-propyl ether, diethylene glycol ethyl-n-butyl ether, diethylene glycol n-propyl-n-butyl ether, and diethylene glycol isopropyl-n-butyl ether.

Examples of the phosphoric acid-based solvents include trimethyl phosphate, triethyl phosphate, tripropyl phosphate, and tributyl phosphate.

One of these solvents may be used alone or at least two thereof may be used in combination.

Among these, ethylene glycol monomethyl ether acetate, ethylene glycol monoethyl ether acetate, ethylene glycol diacetate or diethylene glycol dimethyl ether is preferable as the ethylene glycol-based solvent.

Trimethyl phosphate or triethyl phosphate is preferable as the phosphoric acid-based solvent.

The biuret-forming reaction temperature is preferably 70°C to 200°C, and more preferably 90°C to 180°C. In the case where the biuret-forming reaction temperature is the above-mentioned upper limit or less, the coloration of the polyisocyanate tends to be further effectively prevented.

The above-mentioned allophanate-forming reaction, uretdione-forming reaction, iminooxadiazinedione-forming reaction, isocyanurate-forming reaction, urethane-forming reaction and biuret-forming reaction may be conducted sequentially of some of the reactions may be conducted in parallel.

In the case where a polyisocyanate derived from an isocyanate monomer and a polymerizable alcohol is prepared, the polyisocyanate may be obtained by reacting an isocyanate group of the isocyanate monomer with a hydroxyl group of the polymerizable alcohol (preferably a polyol), for example.

The molar ratio of the isocyanate groups of a diisocyanate to the hydroxyl groups of a polyol (NCO/OH) is preferably 3/1 to 30/1, and more preferably 10/1 to 20/1. In the case where the molar ratio, NCO/OH, is the above-mentioned lower limit or more, an excessive increase in the viscosity of the resultant polyisocyanate composition can be effectively suppressed. In contrast, in the case where the molar ratio, NCO/OH, is the above-mentioned upper limit or less, the decrease in the productivity of the resultant polyisocyanate composition can be further effectively suppressed.

The reaction temperature is preferably 50°C to 200°C, and more preferably 50°C to 150°C. In the case where the reaction temperature is the above-mentioned lower limit or more, the reaction effectively proceeds. In contrast, in the case where the reaction temperature is the above-mentioned upper limit of less, an unfavorable side reaction such as coloring of the resultant polyisocyanate composition can be further effectively suppressed. The reaction time is preferably 0.5 hours to 5 hours.

At least one reaction selected from the group consisting of the above-mentioned allophanate-forming reaction, uretdione-forming reaction, iminooxadiazinedione-forming reaction, isocyanurate-forming reaction, urethane-forming reaction and biuret-forming reaction may be conducted after or when isocyanate groups of a diisocyanate and hydroxyl groups of a polyol are reacted. Among these, the isocyanurate-forming reaction is preferably conducted. The isocyanurate-forming reaction makes it possible to further improve the hardness when made into a coating film.

Unreacted isocyanate monomers are removed from the reaction liquid after the reactions terminate, by thin-film distillation, extraction or the like, to obtain the polyisocyanate.

[Physical property of polyisocyanate]

The average number of functional groups of the polyisocyanate (preferably a water-dispersible polyisocyanate) is preferably 2.5 to 4.0, more preferably 2.8 to 3.8, and even more preferably 3.0 to 3.5. In the case where the average number of functional groups is the above-mentioned lower limit or more, the strength of the resultant urea film can be maintained sufficiently. On the other hand, in the case where the average number of functional groups is the above-mentioned upper limit or less, the metal compound contained in the encapsulated thermally-latent catalyst of the present embodiment can further exhibit catalytic activity when heated.

The average number of functional groups is the number of isocyanate functional groups statically included in one polyisocyanate molecule, and may be calculated from the number-average molecular weight (Mn) of the polyisocyanate and the content of isocyanate groups (NCO%) thereof using the following equation.

$$\text{(Average number of functional groups)} = \text{Mn} \times \text{NCO\%} / 4200$$

<(Hydrophilic) blocked polyisocyanate>

The first polyisocyanate of the polyurethane-based hardener of the present embodiment may be a blocked polyisocyanate derived from a polyisocyanate and a blocking agent.

Alternatively, the first polyisocyanate of another embodiment may be a hydrophilic blocked polyisocyanate derived from a polyisocyanate, a hydrophilic compound and a blocking agent.

Since the polyurethane-based hardener of the present embodiment contains the encapsulated thermally-latent catalyst in the first polyisocyanate, a coating composition having excellent storage stability and low-temperature curability, and a coating film having excellent scratch resistance can be obtained.

<Blocked polyisocyanate>

The blocked polyisocyanate is derived from a polyisocyanate and a blocking agent. Namely, the blocked polyisocyanate is a reactant obtained from the polyisocyanate and the blocking agent, and isocyanate groups of the polyisocyanate are at least partially (preferably entirely) blocked by the blocking agent.

Alternatively, the blocked polyisocyanate is derived from a polyisocyanate, a hydrophilic compound and a blocking agent. Namely, the blocked polyisocyanate is a reactant obtained from the polyisocyanate, the hydrophilic compound and the blocking agent. Isocyanate groups of the polyisocyanate are partially blocked by the blocking agent, and isocyanate groups of the polyisocyanate are partially bonded with functional groups of the hydrophilic compound, as a result of which hydrophilic groups are introduced.

Examples of the polyisocyanate that serves as a raw material of the blocked polyisocyanate and the production method thereof include the same as those mentioned in the "polyisocyanate" above.

The blocking agent that serves as a raw material of the blocked polyisocyanate will be described below.

[Blocking agent]

Although the blocking agent is not particularly limited, examples thereof include: (1) alcohol-based compounds; (2) alkylphenol-based compounds; (3) phenol-based compounds; (4) active methylene-based compounds; (5) mercaptan-based compounds; (6) acidic amide-based compounds; (7) acidic imide-based compounds; (8) imidazole-based compounds; (9) urea-based compounds; (10) oxime-based compounds; (11) amine-based compounds; (12) imine-based compounds; (13) bisulfite salt compounds; (14) pyrazol-based compounds; (15) pyridine-based compounds; (16) guanidine-based compounds; (17) imidazoline-based compounds; (18) pyrimidine-based compounds; (19) triazole-based compounds; and (20) tetrazole-based compound. Specific examples of the blocking agent include the following compounds.

1) Alcohol-based compounds: alcohols such as methanol, ethanol, 2-propanol, n-butanol, sec-butanol, 2-ethyl-1-hexanol, 2-methoxyethanol, 2-ethoxyethanol, and 2-butoxyethanol.

2) Alkylphenol-based compounds: monoalkylphenols and dialkylphenols each having an alkyl group having 4 or more carbon atoms as a substituent. Specific examples of the alkylphenol-based compounds include: monoalkylphenols such as n-propylphenol, iso-propylphenol, n-butylphenol, sec-butylphenol, tert-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-tert-butylphenol, di-sec-butylphenol, di-n-octylphenol, di-2-ethylhexylphenol, and di-n-nonylphenol.

3) Phenol-based compounds: phenol, cresol, ethylphenol, styrenated phenol, and hydroxybenzic acid ester.

4) Active methylene-based compounds.

5) Mercaptan-based compounds: butylmercaptan, and dodecylmercaptan.

6) Acidic amide-based compounds: acetanilide, amide acetate, ε-caprolactam, δ-valerolactam, and γ-butyrolactam.

7) Acidic imide-based compounds: succinimide, and maleimide.

8) Imidazole-based compounds: imidazole, and 2-methylimidazole, 2-ethylimidazole, 4-methylimidazole, and benzimidazole.

9) Urea-based compounds: urea, thiourea, and ethyleneurea.

10) Oxime-based compounds: formaldoxime, acetoaldoxime, acetoxime, methylethylketoxime, and cyclohexanone oxime.

11) Amine-based compounds: diphenylamine, aniline, carbazole, di-n-propylamine, diisopropylamine, and isopropylethylamine.

12) Imine-based compounds: ethyleneimine, and polyethyleneimine.

13) Bisulfite salt compounds: sodium bisulfite.

14) Pyrazole-based compounds: pyrazole, 3-methylpyrazole, and 3,5-dimethylpyrazole.

(15) Pyridine-based compounds: 2-(methylamino)pyridine, 4-hydroxypyridine, and 2-hydroxypyridine.

(16) Guanidine-based compounds: 3,3-dimethylguanidine, and 1,1,3,3-tetramethylguanidine.

(17) Imidazoline-based compounds: 2-methylimidazoline, and 2-phenylimidazoline.

(18) Pyrimidine-based compounds: 2-methyl-1,4,5,6-tetrahydropyrimidine.

(19) Triazole-based compounds: 1,2,4-triazole, 1,2,3-triazole, and 3,5-dimethyl-1,2,4-triazole.

(20) Tetrazole-based compounds: 1H-1,2,3,4-tetrazole.

Among these, the blocking agent is preferably at least one compound selected from the group consisting of oxime-based compounds, amine-based compounds, pyrazole-based compounds, imidazole-based compounds, active methylene-based compounds, and triazole-based compounds, and more preferably a pyrazole-based compound, an active methylene-based compound, or a triazole-based compound, and even more preferably a triazole-based compound. It is particularly preferable that a triazole-based compound and another blocking agent such as an active methylene-based compound be combined so as to improve the compatibility with a polyvalent active hydrogen-containing compound.

Among the triazole-based compounds, 1,2,4-triazole, 1,2,3-triazole, or 3,5-dimethyl-1,2,4-triazole is preferable.

Among the pyrazole compounds, 3,5-dimethylpyrazole is preferable.

Examples of the active methylene-based compounds include dimethyl malonate, diethyl malonate, methyl acetoacetate, ethyl acetoacetate, acetylacetone, and a compound of the following general formula (IV) (hereinafter, may be referred to as "compound (IV)"). Among these, the compound (IV) is preferable.

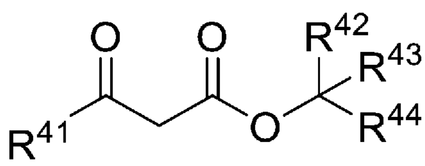

(I V)

In the general formula (IV), $R^{41}$ is a hydroxyl group; an alkyl group which may have at least one substituent selected from the group consisting of a hydroxyl group and an amino group; an amino group which may have at least one substituent selected from the group consisting of a hydroxyl group and an alkyl group; an aryl group which may have at least one substituent selected from the group consisting of a hydroxyl group and an amino group; or an alkoxy group which may have at least one substituent selected from the group consisting of a hydroxyl group and an amino group. In the amino group, two of the above-mentioned substituents may be bonded together to form a ring.

$R^{42}$, $R^{43}$ and $R^{44}$ are each independently a hydrogen atom; a hydroxyl group; an alkyl group which may have at least one substituent selected from the group consisting of a hydroxyl group and an amino group; an amino group which may have at least one substituent selected from the group consisting of a hydroxyl group and an alkyl group; an aryl group which may have at least one substituent selected from the group consisting of a hydroxyl group and an amino group; or an alkoxy group which may have at least one substituent selected from the group consisting of a hydroxyl group and an amino group. In the amino group, two of the above-mentioned substituents may be bonded together to

form a ring. However, at least two of $R^{42}$, $R^{43}$ and $R^{44}$ are not hydrogen atoms.

1. Compound (IV)

(1) $R^{41}$

(1-1) $R^{41}$: Alkyl group

In the case where $R^{41}$ is an unsubstituted alkyl group, the alkyl group preferably has 1 to 30 carbon atoms, more preferably has 1 to 8 carbon atoms, even more preferably 1 to 6 carbon atoms, and particularly preferably 1 to 4 carbon atoms. Specific examples of the unsubstituted alkyl group include a methyl group, an ethyl group, a propyl group, an isopropyl group, a n-butyl group, a tert-butyl group, a sec-butyl group, an isobutyl group, a n-pentyl group, an isopentyl group, a neopentyl group, a tert-pentyl group, a 1-methylbutyl group, a n-hexyl group, a 2-methylpentyl group, a 3-methylpentyl group, a 2,2-dimethylbutyl group, a 2,3-dimethylbutyl group, a n-heptyl group, a 2-methylhexyl group, a 3-methylhexyl group, a 2,2-dimethylpentyl group, a 2,3-dimethylpentyl group, a 2,4-dimethylpentyl group, a 3,3-dimethylpentyl group, a 3-ethylpentyl group, a 2,2,3-trimethylbutyl group, a n-octyl group, an isooctyl group, a 2-ethylhexyl group, a nonyl group, and a decyl group.

In the case where $R^{41}$ is an alkyl group which has a substituent, the substituent is a hydroxyl group or an amino group.

Examples of the alkyl group having a hydroxyl group as a substituent include a hydroxymethyl group, a hydroxyethyl group, and a hydroxypropyl group.

Examples of the alkyl group having an amino group as a substituent include an aminomethyl group, an aminoethyl group, an aminopropyl group, and an aminobutyl group.

Examples of the alkyl group having both a hydroxyl group and an amino group as substituents include a hydroxyaminomethyl group, a hydroxyaminoethyl group, and a hydroxyaminopropyl group.

(1-2) $R^{41}$: Amino group

In the case where $R^{41}$ is an amino which has a substituent, the substituent is a hydroxyl group or an alkyl group.

Examples of the amino group having a hydroxyl group as a substituent include a hydroxyamino group (-NH-OH).

Examples of the amino group having an alkyl group as a substituent include a methylamino group, an ethylamino group, a n-butylamino group, a dimethylamino group, a diethylamino group, a dipropylamino group, a diisopropylamino group, a di-n-butylamino group, a di-tert-butylamino group, a di-sec-butylamino group, a diisobutylamino group, and a 2,6-dimethylpiperidyl group.

Examples of the amino group having both a hydroxyl group and an alkyl group as substituents include a hydroxymethyleneamino group, a hydroxyethyleneamino group, a hydroxypropyleneamino group, and a hydroxybutyleneamino group.

Examples of the amino group, two substituents of which are bonded together to form a ring, include an ethyleneimino group, an azacyclobutyl group, a pyrrolidyl group, a piperidyl group, a 2,6-dimethylpiperidyl group, and a hexamethyleneimino group.

(1-3) $R^{41}$: Aryl group

In the case where $R^{41}$ is an unsubstituted aryl group, the aryl group preferably has 5 to 30 carbon atoms, more preferably has 6 to 20 carbon atoms, and even more preferably has 6 to 14 carbon atoms. Specific examples of the aryl group include monocyclic aromatic hydrocarbon groups, bicyclic aromatic hydrocarbon groups, tricyclic aromatic hydrocarbon groups, tetracyclic aromatic hydrocarbon groups, pentacyclic aromatic hydrocarbon groups, hexacyclic aromatic hydrocarbon groups, and heptacyclic aromatic hydrocarbon groups.

Examples of the monocyclic aromatic hydrocarbon group include a phenyl group, a benzyl group, a tolyl group, and an o-xylyl group.

Examples of the bicyclic aromatic hydrocarbon group include an indanyl group, an indenyl group, a pentalenyl group, an azulenyl group, a naphthyl group, and a tetrahydronaphthyl group.

Examples of the tricyclic aromatic hydrocarbon group include an anthracenyl group, a fluorenyl group, a phenalenyl group, and a phenanthrenyl group.

Examples of the tetracyclic aromatic hydrocarbon group include a pyrenyl group, a naphthacenyl group, and a chrysenyl group.

Examples of the pentacyclic aromatic hydrocarbon group include a perylenyl group, a pycenyl group, and a pentacenyl group.

Examples of the hexacyclic aromatic hydrocarbon group include a naphtopyrenyl group.

Examples of the heptacyclic aromatic hydrocarbon group include a coronenyl group.

In the case where $R^{41}$ is an aryl group which has a substituent, the substituent is a hydroxyl group or an amino group.

Examples of the aryl group having a hydroxyl group as a substituent include a phenol group.

Examples of the aryl group having an amino group as a substituent include an aniline group.

Examples of the aryl group having both a hydroxyl group and an amino group as substituents include an aminophenol group (a hydroxyaniline group).

(1-4) $R^{41}$: Alkoxy group

In the case where $R^{41}$ is an unsubstituted alkoxy group, the alkoxy group preferably has 1 to 30 carbon atoms, more preferably has 1 to 8 carbon atoms, even more preferably has 1 to 6 carbon atoms, and particularly preferably has 1 to 4 carbon atoms. Specific examples of the alkoxy group include a methoxy group, an ethoxy group, a propoxy group, an isopropoxy group, a n-butoxy group, a tert-butoxy group, a sec-butoxy group, an isobutoxy group, a n-pentoxy group, an isopentoxy group, a neopentoxy group, a tert-pentoxy group, a 1-methylbutoxy group, a n-hexoxy group, a 2-methylpentoxy group, a 3-methylpentoxy group, a 2,2-dimethylbutoxy group, a 2,3-dimethylbutoxy group, a n-heptoxy group, a 2-methylhexoxy group, a 3-methylhexoxy group, a 2,2-dimethylpentoxy group, a 2,3-dimethylpentoxy group, a 2,4-dimethylpentoxy group, a 3,3-dimethylpentoxy group, a 3-ethylpentoxy group, a 2,2,3-trimethylbutoxy group, a n-octoxy group, an isooctoxy group, a 2-ethylhexoxy group, a nonynoxy group, and a decyloxy group.

In the case where $R^{41}$ is an alkoxy group which has a substituent, the substituent is a hydroxyl group or an amino group.

Examples of the alkoxy group having a hydroxyl group as a substituent include a hydroxymethyleneoxy group, a hydroxyethyleneoxy group, a hydroxypropyleneoxy group, and a hydroxybutyleneoxy group.

Examples of the alkoxy group having an amino group as a substituent include an aminomethyleneoxy group, an aminoethyleneoxy group, an aminopropyleneoxy group, and an aminobutyleneoxy group.

Examples of the alkoxy group having both a hydroxyl group and an amino group as substituents include a hydroxyaminomethylidyneoxy group, a hydroxyaminoethylidyneoxy group, and a hydroxyaminopropylidyneoxy group.

(2) $R^{42}$, $R^{43}$ and $R^{44}$

In the general formula (IV), $R^{42}$, $R^{43}$ and $R^{44}$ are each independently a hydrogen atom; a hydroxyl group; an alkyl group which may have at least one substituent selected from the group consisting of a hydroxyl group and an amino group; an amino group which may have at least one substituent selected from the group consisting of a hydroxyl group and an alkyl group; an aryl group which may have at least one substituent selected from the group consisting of a hydroxyl group and an amino group; or an alkoxy group which may have at least one substituent selected from the group consisting of a hydroxyl group and an amino group. In the amino group, two of the above-mentioned substituents may be bonded together to form a ring. However, at least two of $R^{42}$, $R^{43}$ and $R^{44}$ are not hydrogen atoms.

Examples of the alkyl group, the amino group, the aryl group and the alkoxy group include the same groups as those mentioned for "$R^{41}$" above.

Among these, it is preferable that $R^{42}$, $R^{43}$ and $R^{44}$ be each independently a hydrogen atom; an alkyl group which may have at least one substituent selected from the group consisting of a hydroxyl group and an amino group; or an aryl group which may have at least one substituent selected from the group consisting of a hydroxyl group and an amino group, and at least two of $R^{42}$, $R^{43}$ and $R^{44}$ not be hydrogen atoms.

It is preferable that in the compound (IV) $R^{41}$ be an alkoxy group, $R^{42}$ be a hydrogen atom or an alkyl group, and both $R^{43}$ and $R^{44}$ be alkyl groups, from the viewpoint of ease of industrial availability and excellent low-temperature curability.

Furthermore, in the case where the compound (IV) has a tert-butyl ester structure or a tert-pentyl ester structure, the low-temperature curability and the water-resistance when made into a coating film tend to become excellent. In the case where the compound (IV) has a sec-butyl ester structure or an iso-propyl ester structure, the storage stability (dispersion stablity in water and viscosity stablity) when made into a coating composition and the low-temperature curability and hardness retainability when made into a coating film tend to become excellent.

Preferable examples of the compound (IV) include isopropyl acetoacetate, di-sec-butyl malonate, di-tert-butyl malonate, di-tert-pentyl malonate, diisopropyl malonate, tert-butylethyl malonate, and isopropylethyl malonate.

Among these, di-sec-butyl malonate, di-tert-butyl malonate, di-tert-pentyl malonate, diisopropyl malonate or tert-butylethyl malonate is preferable from the viewpoint of the low-temperature curability of the resultant coating film.

A hydrophilic compound which serves as a raw material of the hydrophilic blocked polyisocyanate will be described below.

[Hydrophilic compound]

A hydrophilic compound is a compound having a hydrophilic group, and preferably has at least one active hydrogen group that reacts with at least one isocyanate group of the polyisocyanate relative to one molecule of the hydrophilic compound. Specific examples of the active hydrogen group include a hydroxyl group, a mercapto group, a carboxylic acid group, an amino group, and a thiol group.

Examples of the hydrophilic group include nonionic hydrophilic groups, cationic hydrophilic groups, and anionic hydrophilic groups. One of these hydrophilic groups may be used alone, or at least two thereof may be used in combination. Among them, the hydrophilic group is preferably a nonionic hydrophilic group from the viewpoint of ease of availability and resistance to electrical interaction with the contained components.

(1) Hydrophilic compound having a nonionic hydrophilic group

Specific examples of the hydrophilic compound having a nonionic hydrophilic group (hereinafter, may be referred to as "nonionic hydrophilic compound") include monoalcohols, and compounds formed by adding an ethylene oxide to a hydroxyl group of an alcohol such as a monoalcohol. Examples of the monoalcohols include methanol, ethanol, and butanol. Examples of the compounds formed by adding an ethylene oxide to a hydroxyl group of an alcohol include ethylene glycol, diethylene glycol, and polyethylene glycol. These nonionic hydrophilic compounds have an active hydrogen group that reacts with an isocyanate group.

Among them, the nonionic hydrophilic compound is preferably a polyalkylene glycol monoalkyl ether formed by adding an alkylene oxide to a hydroxyl group of a monoalcohol, more preferably a polyethylene glycol monoalkyl ether, and even more preferably a polyethylene glycol monomethyl ether from the viewpoint that a small used amount thereof makes it possible to improve the dispersibility in water of the water-dispersible polyisocyanate.

The addition number of ethylene oxide of the compounds formed by addition of ethylene oxide is preferably 4 to 30, and more preferably 4 to 20. In the case where the addition number of ethylene oxide is the above-mentioned lower limit or more, the dispersibility in water tends to be further effectively imparted to the water-dispersible polyisocyanate. In the case where the addition number of ethylene oxide is the above-mentioned upper limit or less, generation of precipitate of the water-dispersible polyisocyanate when stored at a low temperature tends to be further suppressed.

The lower limit of the amount of nonionic hydrophilic groups added to the polyisocyanate (hereinafter, may be referred to as "amount of nonionic hydrophilic groups") relative to the mass of the solid content of the water-dispersible polyisocyanate is preferably 1% by mass, more preferably 3% by mass, even more preferably 4% by mass, and particularly preferably 4.5% by mass, from the viewpoint of the dispersion stability in water of the water-dispersible polyisocyanate.

The upper limit of the amount of nonionic hydrophilic groups relative to the mass of the solid content of the water-dispersible polyisocyanate is preferably 30% by mass, more preferably 20% by mass, even more preferably 10% by mass, and particularly preferably 8% by mass, from the viewpoint of water resistance of the resultant coating film.

Namely, the amount of nonionic hydrophilic groups relative to the mass of the solid content of the water-dispersible polyisocyanate is preferably 1% by mass to 30% by mass, more preferably 3% by mass to 20% by mass, even more preferably 4% by mass to 10% by mass, and particularly preferably 4.5% by mass to 8% by mass.

In the case where the amount of nonionic hydrophilic groups is within the above-mentioned range, the water-dispersible polyisocyanate tends to be further dispersed in water, and the water-resistance of the resultant coating film tends to be further improved.

(2) Hydrophilic compound having a cationic hydrophilic group

Specific examples of the hydrophilic compound having a cationic hydrophilic group (hereinafter, may be referred to as "cationic hydrophilic compound") include compounds each having both a cationic hydrophilic group and an active hydrogen group. Furthermore, a compound having an active hydrogen group such as a glycidyl group and a compound having a cationic hydrophilic group such as sulfide or phosphine may be combined to be used as hydrophilic compounds. In this case, a compound having an isocyanate group and a compound having an active hydrogen group are reacted in advance to add a functional group such as a glycidyl group, followed by reacting the resultant with a compound such as sulfide or phosphine. A compound having both a cationic hydrophilic group and an active hydrogen group is preferable from the viewpoint of ease of preparation.

Specific examples of the compound having both a cationic hydrophilic group and an active hydrogen group include dimethylethanolamine, diethylethanolamine, diethanolamine, and methyldiethanolamine. A tertiary amino group added using the compound may be quaternized with dimethyl sulfate or diethyl sulfate, for example.

The cationic hydrophilic compound may be reacted with a polyisocyanate in the presence of a solvent. In this case, it is preferable that the solvent not have any active hydrogen groups, and specific examples thereof include ethyl acetate, propylene glycol monomethyl ether acetate and dipropylene glycol dimethyl ether.

The cationic hydrophilic group added to the polyisocyanate is preferably neutralized with a compound having an anionic group. Specific examples of the anionic group include a carboxy group, a sulfonic acid group, a phosphoric acid group, halogen groups, and a sulfuric acid group.
Specific examples of the compound having a carboxy group include formic acid, acetic acid, propionic acid, butyric acid, and lactic acid.
Specific examples of the compound having a sulfonic acid group include ethane sulfonic acid.
Specific examples of the compound having a phosphoric acid group include phosphoric acid, and acidic phosphoric acid ester.
Specific examples of the compound having a halogen group include hydrochloric acid.
Specific examples of the compound having a sulfuric acid group include sulfuric acid.
Among them, the compound having an anionic group is preferably a compound having a carboxy group, and more preferably acetic acid, propionic acid or butyric acid.

(3) Hydrophilic compound having an anionic hydrophilic group

Specific examples of the anionic hydrophilic group include a carboxy group, a sulfonic acid group, a phosphoric acid group, halogen groups, and a sulfuric acid group.
Specific examples of the hydrophilic compound having an anionic hydrophilic group (hereinafter, may be referred to as "anionic hydrophilic compound") include compounds each having both an anionic group and an active hydrogen group, and further specific examples thereof include compounds having, as an anionic group, a carboxy group of monohydroxycarboxylic acids or polyhydroxycarboxylic acids.
Examples of the monohydroxycarboxylic acid include 1-hydroxyacetic acid, 3-hydroxypropanic acid, 12-hydroxy-9-octadecanoic acid, hydroxypivalic acid, and lactic acid.
Examples of the compounds having, as an anionic group, a carboxy group of polyhydroxycarboxylic acids include dimethylol acetic acid, 2,2-dimethylol butyric acid, 2,2-dimethylol pentanoic acid, dihydroxysuccinic acid, and dimethylol propionic acid.
Furthermore, a compound having both a sulfonic acid group and an active hydrogen group may be used, and specific examples thereof include isethionic acid.
Among them, the compound having both an anionic group and an active hydrogen group is preferably hydroxylpivalic acid or dimethylol propionic acid.
The anionic hydrophilic group added to the polyisocyanate is preferably neutralized with an amine-based compound which is a basic substance.
Specific examples of the amine-based compound include ammonia, and water-soluble amino compounds.
Specific examples of the water-soluble amino compound include monoethanolamine, ethylamine, dimethylamine, diethylamine, triethylamine, propylamine, dipropylamine, isopropylamine, diisopropylamine, triethanolamine, butylamine, dibutylamine, 2-ethylhexylamine, ethylenediamine, propylenediamine, methylethanolamine, dimethylethanolamine, diethylethanolamine, and morpholine. Furthermore, tertiary amines such as triethylamine or dimethylethanolamine may be used. One of the amine-based compounds may be used alone or a combination of at least two thereof may be used.

[Method for producing blocked polyisocyanate]

A blocked polyisocyanate may be obtained by reacting a polyisocyanate and the above-mentioned blocking agent, for example.
The blocking reaction of the polyisocyanate and the blocking agent may be conducted without depending on the presence or absence of a solvent, and the reaction liquid obtained by the blocking reaction (blocked polyisocyanate composition) may be blended in the polyurethane-based hardener.
It is preferable that a polyisocyanate and a blocking agent be mixed such that the molar ratio of the active hydrogen group contained in the blocking agent relative to one mol of the isocyanate group contained in the polyisocyanate be 0.5 to 3.0, more preferably 0.8 to 2.0, and even more preferably 1 to 1.5, from the viewpoint of the storage stability of a one-liquid type coating composition.
The reaction temperature or the reaction time may be appropriately determined depending on the progress of the reaction in the reaction step. The reaction temperature is preferably 0°C to 150°C, and the reaction time is preferably 0.5 hours to 24 hours.
In the case where two of the blocking agents are used in combination, the blocking reaction due to both the blocking agents may be conducted simultaneously or blocking may be conducted with one of the blocking agents in advance, followed by blocking the remaining free isocyanate groups with the other blocking agent.
Furthermore, a conventionally-known catalyst may be used, as needed, in the reaction. Although the catalyst

is not particularly limited, examples thereof include the following catalysts (1) to (6). One of the following catalysts may be used alone or a mixture thereof may be used.

(1) Organic tin compounds such as tin octanoate, tin 2-ethyl-1-hexanoate, tin ethylcaproate, tin laurate, tin palmitate, dibutyltin oxide, dibutyltin dichloride, dibutyltin diacetate, dibutyltin dimalate, dibutyltin dilaurate, dioctyltin diacetate, and dioctyltin dilaurate.
(2) Zinc chloride, and organic zinc compounds such as zinc octanoate, zinc 2-ethyl-1-hexanoate, zinc 2-ethylcaproate, zinc stearate, zinc naphthenate, and zinc acetylacetonate.
(3) Organic titanium compounds.
(4) Organic zirconium compound.
(5) Tertiary amines such as triethylamine, tributylamine, N,N-diisopropylethylamine, and N,N-dimethylethanolamine
(6) Diamines such as triethylenediamine, tetramethylethylenediamine, and 1,4-diazabicyclo[2.2.2]octane.

The end of the reaction may be determined by confirming the disappearance or decrease of isocyanate groups by an infrared spectroscopic analysis, for example.

In the case where a solvent is used, a solvent which is inactive against isocyanate groups may be used.

In the case where a solvent is used, the solid content derived from the polyisocyanate and the blocking agent, relative to 100 parts by mass of the blocked polyisocyanate composition, may be usually 10 parts by mass to 95 parts by mass, and is preferably 20 parts by mass to 80 parts by mass, and more preferably 30 parts by mass to 70 parts by mass.

Alternatively, the blocked polyisocyanate may also be obtained as a hydrophilic blocked polyisocyanate by reacting a polyisocyanate, a hydrophilic compound and a blocking agent.

The reaction of isocyanate groups of a polyisocyanate and a hydrophilic compound and the reaction of a polyisocyanate and a blocking agent may be conducted simultaneously, or one of the reactions may be conducted in advance, followed by conducting the other reaction. Among them, it is preferable that the reaction of an isocyanate group and a hydrophilic compound be conducted in advance to obtain a polyisocyanate modified with the hydrophilic compound (hereinafter, may be referred to as "modified polyisocyanate") followed by reacting the resultant modified polyisocyanate and a blocking agent.

In the reaction of the polyisocyanate and the hydrophilic compound, an organic metallic salt, a tertiary amine-based compound, of an alcoholate of alkali metal may be used as a catalyst. Examples of metal constituting the organic metallic salt include tin, zinc, and lead. Examples of the alkali metal include sodium.

The reaction of the polyisocyanate and the hydrophilic compound is preferably conducted at -20°C to 150°C, and more preferably at 30°C to 130°C. In the case where the reaction temperature is the above-mentioned lower limit or more, the reactivity tends to be further increased. In the case where the reaction temperature is the above-mentioned upper limit or less, the side-reaction tends to be further effectively suppressed.

It is preferable that the hydrophilic compound be completely reacted with the polyisocyanate such that the hydrophilic compound does not remain in an unreacted state. The absence of the unreacted hydrophilic compound tends to further suppress effectively the deterioration of both the dispersion stability in water of the blocked isocyanate composition of the present embodiment and the low-temperature curability when made into a coating composition.

The blocking reaction of either the polyisocyanate or the modified polyisocyanate with a blocking agent may be conducted without depending on the presence or absence of a solvent.

The blocking reaction may be conducted in the above-mentioned reaction.

In the case where the blocking reaction is conducted using water or a solvent, a solvent inactive against isocyanate groups may be used.

Examples of the solvent include 1-methylpyrrolidone, ethylene glycol monoethyl ether, diethylene glycol monoethyl ether, ethylene glycol monomethyl ether, diethylene glycol monomethyl ether, dipropylene glycol monomethyl ether, propylene glycol monomethyl ether, 3-methoxy-3-methyl-1-butanol, ethylene glycol diethyl ether, diethylene glycol diethyl ether, ethylene glycol dimethyl ether, diethylene glycol dimethyl ether, dipropylene glycol dimethyl ether, propylene glycol dimethyl ether, methyl ethyl ketone, acetone, methyl isobutyl ketone, propylene glycol monomethyl ether acetate, ethanol, methanol, iso-propanol, 1-propanol, iso-butanol, 1-butanol, 2-ethylhexanol, cyclohexanol, ethylene glycol, diethylene glycol, triethylene glycol, propylene glycol, propylene glycol, dipropylene glycol, 1,4-butanediol, 1,3-butanediol, ethyl acetate, isopropyl acetate, butyl acetate, toluene, xylene, pentane, iso-pentane, hexane, iso-hexane, cyclohexane, solvent naphtha, and mineral spirits. One of these solvents may be used alone or a combination of at least two thereof may be used.

In the case where a solvent is used, the solid content derived from the polyisocyanate and the blocking agent relative to 100 parts by mass of the blocked polyisocyanate composition may be usually 10 parts by mass to 95 parts by mass, preferably 20 parts by mass to 80 parts by mass, and even more preferably 30 parts by mass to 70 parts by mass.

In the case where water is used, it is preferable that the predetermined amount thereof be added dividedly or added dropwise. In the case of the divided addition, the predetermined amount of water is preferably divided into quarters

to eighths. It is preferable that the liquid temperature be maintained at 50°C or higher in the case where the concentration of the blocked polyisocyanate relative to water is 55% by mass or more, be maintained at 45°C to 50°C in the case where the concentration of the blocked polyisocyanate relative to water is 45% by mass to less than 55% by mass, or be maintained at less than 50°C in the case where the concentration of the blocked polyisocyanate relative to water is less than 45% by mass.

In the case where water is added at once, or the liquid temperature becomes 80°C or more or less than 20°C, the average particle size (average dispersed particle size) of aqueous dispersion of the blocked polyisocyanate may be increased, thereby causing precipitation or separation, or deteriorating the stability of the aqueous dispersion. Accordingly, the concentration of the blocked polyisocyanate in the thus obtained aqueous dispersion composition is preferably 10% by mass to 40% by mass.

In any of the above-mentioned methods for producing the blocked polyisocyanate, the encapsulated thermally-latent catalyst may be added any time of: before or after the reaction of the polyisocyanate and the hydrophilic compound; and before or after the blocking reaction, but the encapsulated thermally-latent catalyst is preferably added after decreasing the temperature to 100°C or less after both the reaction of the polyisocyanate and the hydrophilic compound and the blocking reaction so as to prevent denaturation of the encapsulated thermally-latent catalyst. The encapsulated thermally-latent catalyst is preferably added such that the amount of the encapsulated thermally-latent catalyst when made into a coating composition becomes within the below-mentioned range.

An antioxidant or an ultraviolet absorber may be added to the resultant polyisocyanate so as to suppress coloration when stored.

Examples of the antioxidant include hindered phenols such as 2,6-di-tert-butyl-p-cresol. Examples of the ultraviolet absorber include benzotriazole and benzophenone. One of these antioxidants and ultraviolet absorbers may be used alone, or at least two thereof may be used in combination. The addition amount thereof is preferably 10 ppm by mass to 500 ppm by mass relative to the mass of the polyisocyanate.

<Encapsulated thermally-latent catalyst>

An encapsulated thermally-latent catalyst of the present embodiment is coated with a polyurea film derived from a polyamine compound and a polyisocyanate (second polyisocyanate).

Since the encapsulated thermally-latent catalyst of the present embodiment is formed by coating a compound having a catalytic activity with a polyurea film, the expression of the catalytic activity can be suppressed when blended in a coating composition, and the storage stability can be maintained favorably. In contrast, when a coating film is formed using a coating composition including the encapsulated thermally-latent catalyst of the present embodiment, the polyurea film is cleaved or swollen by heat, as a result of which the compound having a catalytic activity is released into a coating liquid, thereby allowing the catalytic activity to be expressed and making the curability at a low temperature of approximately 60°C to 110°C (hereinafter, may be referred to as "low-temperature curability") favorable. Furthermore, the resultant coating film can exhibit excellent scratch resistance due to the presence of the polyurea film derived from the encapsulated thermally-latent catalyst in the cured coating film.

Constitution components of the encapsulated thermally-latent catalyst of the present embodiment will be explained in detail below.

<Compound having a catalytic activity>

The compound having a catalytic activity exhibits catalytic action in the urethane-forming reaction or the dissociation reaction of a blocking agent from a blocked isocyanate group.

Examples thereof include: organic basic compounds such as tertiary amine compounds; organic acidic compounds having a carboxyl group, a sulfonyl group, or an acidic phosphoric acid group; and metal compounds.

Among them, organic basic compounds and metal compounds are preferable, and metal compounds are most preferable.

[Organic basic compound]

Examples of the organic basic compound include: tertiary amines such as triethylamine, tributylamine, N,N-diisopropylethylamine, N,N-dimethylethanolamine; and 1,4-diazabicyclo[2.2.2]octane.

[Organic acidic compound]

Examples of the organic acidic compounds include acetic acid, propionic acid, paratoluenesulfonic acid, and dibutyl phosphate.

[Metal compound]

The metal compound is a compound having a basic group or an organic ligand in a metal, and preferably exhibits a catalytic action in the urethane-forming reaction.
Examples of the metal type constituting the metal compound include sodium, potassium, lithium, cesium, nickel, cobalt, cadmium, barium, calcium, zinc, manganese, copper, cerium, zirconium, tin, iron, lead, germanium and antimony, aluminum, titanium and bismuth. Among them, the metal type is preferably a divalent or more-valent metal, more preferably nickel, cobalt, cadmium, barium, calcium, zinc, manganese, copper, cerium, zirconium, tin, iron, lead, germanium, antimony, aluminum, titanium, or bismuth, even more preferably tin, zirconium, or bismuth, and even more preferably tin or bismuth.
Examples of the basic group include hydroxides, alkoxides, hydroxides of onium salts, onium carboxylates, halides of onium salts, aminosilanes, amines, and phosphines. As the onium salt, an ammonium salt, a phosphonium salt or a sulfonium salt is preferable.
Examples of the organic ligand include carboxylate (carboxylic acid), acetylacetylate, onium carboxylate, metal salts of active methylene compounds, and onium salts of active methylene compounds. As the onium salts, ammonium salts, phosphonium salts or sulfonium salts are preferable.
Among them, the metal compound is preferably metal carboxylate or metal acetylacetonates, because it is preferable that the metal compound dissolve in a solvent and exhibit hydrophobicity particularly at the time of synthesis.
The carboxylate (carboxylic acid) constituting the metal carboxylate includes both monocarboxylic acid and dicarboxylic acid, and examples thereof include aliphatic saturated acids, unsaturated acids and aromatic acids, such as formic acid, acetic acid, acrylic acid, methacrylic acid, propionic acid, butyric acid, hexanoic acid, octylic acid, octanoic acid, capric acid, stearic acid, oleic acid, eicosanoic acid, myristic acid and benzoic acid. Among them, the carboxylate (carboxylic acid) preferably has 1 to 12 carbon atoms from the viewpoint of compatibility, and is more preferably an aliphatic acid having 1 to 12 carbon atoms from the viewpoint of yellowing of the coating film.
Preferable examples of the metal carboxylate include bismuth 2-ethylhexanoate, dibutyltin dilaurate, and dioctyltin dilaurate.

<Polyurea film>

The polyurea film is derived from a polyamine compound and a second polyisocyanate. Among them, the second polyisocyanate is preferably derived from a water-dispersible polyisocyanate, and the polyurea film is preferably a reactant of the polyamine compound and the water-dispersible polyisocyanate.

[Polyamine compound]

Although the polyamine compound is not particularly limited, the polyamine compound has at least one primary amino group or secondary amino group in one molecule thereof and has at least two functional groups reactable with isocyanate groups in one molecule thereof.
Namely, the polyamine compound includes a polyamine having only either a primary amino group or a secondary amino group and an alkanolamine having either a primary amino group or a secondary amino group and a hydroxyl group.
Specific examples of the polyamine include the following (1) to (3).

(1) Diamines, such as ethylenediamine, propylenediamine, butylenediamine, triethylenediamine, hexamethylenediamine, 4,4' -diaminodicyclohexylmethane, piperazine, 2-methylpiperazine, and isophorone diamine.
(2) Chained polyamines having at least three amino groups, such as bishexamethylene triamine, diethylenetriamine, triethylenetetramine, tetraethylenepentamine, pentamethylenehexamine, and tetrapropylenepentamine.
(3) Cyclic polyamines such as 1,4,7,10,13,16-hexaazacyclooctadecane, 1,4,7,10-tetraazacyclodecane, 1,4,8,12-tetraazacyclopentadecane, and 1,4,8,11-tetraazacyclotetradecane.

Specific examples of the alkanolamine include monoethanolamine, diethanolamine, aminoethylethanolamine, N-(2-hydroxypropyl)ethylenediamine, mono-, di-(n- or iso-)propanolamine, ethylene glycol bis-propylamine, neopentanolamine, and methylethanolamine.
Among them, the polyamine compound is preferably a polyamine having only either a primary amino group of a secondary amino group, more preferably a polyamine having at least two secondary amino groups in one molecule thereof, and even more preferably a polyamine having two secondary amino groups in one molecule thereof, from the viewpoint of reaction controllability when a polyurea film is formed and catalytic activity of a metal compound when heating is conducted.
Examples of the polyamine having at least two secondary amino groups in one molecule thereof include compounds of the following general formula (1) (hereinafter, may be referred to as "compound (I)").

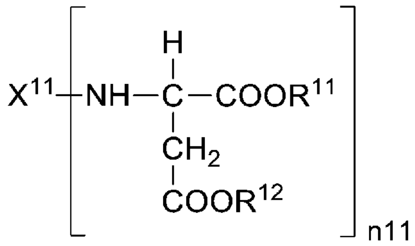

(I)

In the general formula (1), $X^{11}$ is an n-valent organic group obtained by removing a primary amino group from an n11-valent polyamine. $R^{11}$ and $R^{12}$ are organic groups which are inactive against any isocyanate groups under reaction conditions and are identical to or different from each other. n11 is an integer of 2 or more.

Although $X^{11}$ in the formula (I) is not particularly limited, $X^{11}$ is preferably an organic group derived from an aliphatic and/or alicyclic polyamine which does not have any aromatic groups from the viewpoint of the yellowing resistance, and examples thereof include n11-valent polyamines selected from the following group consisting of: 1,2-diaminopropane, 1,4-diaminobutane, 1,5-diaminopentane, 1,6-diaminohexane, 2,5-diamino-2,5-dimethylhexane, 2,2,4- and/or 2,4,4-trimethyl-1,6-diaminohexane, 1,11-diaminoundecane, 1,12-diaminododecane, 1-amino-3,3,5-trimethyl-5-aminomethylcyclohexane, 2,4- and/or 2,6-hexahydrotollylene diamine, 2,4'- and/or 4,4'-diaminodicyclohexyl methane, 3,3'-dimethyl-4,4'-diaminodicyclohexyl methane, 2,4,4'-triamino-5-methyldicyclohexyl methane, and organic groups derived from polyether polyamines each having a number-average molecular weight of 148 to 6000, in which a primary amino group is bonded aliphatically.

Among them, $X^{11}$ is preferably an organic group derived from 1,4-diaminobutane, 1,5-diaminopentane, 1,6-diaminohexane, 2,2,4- and/or 2,4,4-trimethyl-1,6-diaminohexane, 1-amino-3,3,5-trimethyl-5-aminomethylcyclohexane, 4,4'-diaminodicyclohexyl methane, or 3,3'-dimethyl-4,4'-diaminodicyclohexyl methane, and more preferably an organic group derived from 4,4'-diaminodicyclohexyl methane, or 3,3'-dimethyl-4,4'-diaminodicyclohexyl methane.

The phrase "inactive against any isocyanate groups under reaction conditions" defined for $R^{11}$ and $R^{12}$ in the formula (1) means that these groups do not have any Tserevitinov active hydrogen-containing groups (CH acidic compound) such as a hydroxyl group, an amino group, or a thiol group.

It is preferable that $R^{11}$ and $R^{12}$ be each independently an alkyl group having 1 to 10 carbon atoms, and more preferably a methyl group, an ethyl group, or a butyl group.

In the formula (I), n11 is preferably an integer of 2 to 6, more preferably an integer of 2 to 4, and even more preferably 2.

Preferable examples of the compound (I) include an aspartic acid ester compound derived from two molecules of aspartic acid having a secondary amino group and one molecule of 4,4'-diaminodicyclohexyl methane.

Although the method for producing the compound (I) is not particularly limited, the compound (I) is produced, for example, by reacting a primary polyamine of the following formula (II) with a maleic acid ester or a fumaric acid ester of the following formula (111).

$$X^{11}\text{-}[NH_2]_{n11} \qquad \text{(II)}$$

$$R^{11}OOC\text{-}CH\text{=}CH\text{-}COOR^{12} \qquad \text{(III)}$$

In the above-shown formulae, $X^{11}$, $R^{11}$, $R^{12}$, and n11 are the same as those defined in the formula (I).

Although there are no particular limitations on an appropriate polyamine, examples thereof include diamines described above as causative compounds of $X^{11}$.

Although an appropriate maleic acid ester or fumaric acid ester is not particularly limited, examples thereof include maleic acid esters and fumaric acid esters having the groups defined as $R^{11}$ and $R^{12}$ in the formula (I) as $R^{11}$ and $R^{12}$. Among them, a maleic acid ester or fumaric acid in which $R^{11}$ and $R^{12}$ are alkyl groups having 1 to 10 carbon atoms is preferable, and dimethyl maleate, diethyl maleate, dibutyl maleate, dimethyl fumarate, diethyl fumarate, or dibutyl fumarate is more preferable.

It is preferable to prepare an aspartic acid ester compound from the described starting materials at a temperature of 0°C to 100°C. The starting materials are used at a ratio such that at least one, preferably only one olefin double bond is present in each primary amino group. The starting materials excessively used may be removed by distillation after the reaction, as needed. The reaction may be carried out in bulk of in the presence of a suitable solvent (such as, but not limited to, methanol, ethanol, propanol, dioxane, or a mixture of such solvents).

[Polyisocyanate (second polyisocyanate)]

A polyisocyanate (second polyisocyanate) is used to form a urea film used in the encapsulated catalyst of the present embodiment. As the second polyisocyanate, water-dispersed polyisocyanate is preferably used.

[Water-dispersible polyisocyanate]

Furthermore, the encapsulated thermally-latent catalyst of the present embodiment is preferably prepared by an interfacial polymerization method in which a polyurea film is formed at an interface of an oil droplet in water, and therefore the polyisocyanate preferably exhibits water-dispersibility, namely, the polyisocyanate is preferably a water-dispersible polyisocyanate. The water-dispersible polyisocyanate is derived from the polyisocyanate and the hydrophilic compound, namely, is a reactant of the polyisocyanate and the hydrophilic compound. In the water-dispersible polyisocyanate, at least some of the isocyanate groups of the polyisocyanate and functional groups of the hydrophilic compound form bonds, and therefore the hydrophilic groups are introduced thereinto. Namely, at least some of the isocyanate groups of the polyisocyanate are modified with the hydrophilic compound.

The ratio of isocyanate groups modified by the hydrophilic compound in the isocyanate groups of the water-dispersible polyisocyanate, namely, the modification ratio, is preferably 0.5% by mol to 50% by mol, more preferably 1% by mol to 30% by mol, even more preferably 2% by mol to 20% by mol, and particularly preferably 3% by mol to 15% by mol, relative to 100% by mol of the isocyanate groups of the raw material polyisocyanate. In the case where the modification rate is the above-mentioned lower limit or more, water dispersibility can be more sufficiently secured. In contrast, in the case where the modification rate is the above-mentioned upper limit or less, the strength of the polyurea film can be more sufficiently maintained.

(Hydrophilic compound)

Examples of the hydrophilic compound include those described in the above-mentioned "hydrophilic blocked polyisocyanate".

(Method for producing water-dispersible polyisocyanate)

The water-dispersible polyisocyanate may be obtained, for example, by reacting a polyisocyanate with a hydrophilic compound.

In the reaction between the polyisocyanate and the hydrophilic compound, an organic metal salt, a tertiary amine-based compound, or an alkali metal alcoholate may be used as a catalyst. Examples of the metal constituting the organic metal salt include tin, zinc, and lead. Examples of the alkali metal include sodium.

The polyisocyanate and the hydrophilic compound are preferably reacted at a temperature of -20°C to 150°C, and more preferably 30°C to 100°C. In the case where the reaction temperature is the above-mentioned lower limit or more, the reactivity tends to be enhanced. In the case where the reaction temperature is the above-mentioned upper limit or less, the side reaction tends to be suppressed more effectively.

It is preferable that the hydrophilic compound be completely reacted with the polyisocyanate such that the hydrophilic compound does not remain in an unreacted state. The absence of the unreacted hydrophilic compound tends to further suppress effectively the deterioration of the dispersion stability in water of the water-dispersible polyisocyanate and the low-temperature curability of a coating composition including the encapsulated thermally-latent catalyst of the present embodiment.

<Method for producing encapsulated thermally-latent catalyst>

The method for producing an encapsulated thermally-latent catalyst of the present embodiment will be explained below in detail.

A capsule component of the encapsulated thermally-latent catalyst is composed of a polyurea film and is formed by the reaction of a polyamine compound with a second polyisocyanate.

Although the molar ratio of the amine groups derived from a polyamine compound to the isocyanate groups of a polyisocyanate (amine groups / isocyanate groups) in the reaction of the polyamine compound and the second polyisocyanate is not particularly limited, the molar ratio of the amine groups / isocyanate groups is preferably 0.2 to 5, more preferably 0.33 to 4, even more preferably 0.5 to 2.5, and particularly preferably 0.6 to 1.5. In the case where the molar ratio of the amine groups / isocyanate groups is the above-mentioned lower limit or more, a polyurea film can be formed more sufficiently. In the case where the molar ratio of the amine groups / isocyanate groups is the above-mentioned upper limit or less, the separation of a compound having a catalytic activity (such as metal compound) after encapsulation

is further improved.

Although the method for forming the polyurea film is not particularly limited, an interfacial polymerization method is preferably used.

Namely, specific examples of the method for producing the encapsulated thermally-latent catalyst of the present embodiment include a method including the following steps:

a step in which a mixture is prepared by mixing a polyamine compound and a compound having a catalytic activity (such as a metal compound) (hereinafter, may be referred to as "step 1");
a step in which a dispersion liquid is prepared by dispersing the mixture in water (hereinafter, may be referred to as "step 2"); and
a step in which a water-dispersible polyisocyanate is added dropwise into the dispersion liquid to form a polyurea film derived from the polyamine compound and the water-dispersible polyisocyanate by an interfacial polymerization method to coat the compound having a catalytic activity (such as metal compound) with the polyurea film (hereinafter, may be referred to as "step 3").

In the step 1, the compound having a catalytic activity (such as a metal compound) and a polyamine compound are uniformly mixed to prepare a mixture. Here, the mixing ratio (mass ratio) of the active ingredient of the compound having a catalytic activity and the polyamine compound (the compound having a catalytic activity: the polyamine compound) is preferably 5: 1 to 1: 5, and more preferably 3: 1 to 1: 3. In the case where the mixing ratio of the compound having a catalytic activity and the polyamine compound satisfies the above-mentioned range, there is a tendency in which both the storage stability and the low-temperature curability are achieved.

In the step 1, a solvent is added, as needed. The solvent type in which the above-mentioned components are uniformly dispersed in the mixture and the amount of the solvent added can be appropriately determined. Among them, the solvent is preferably a hydrophobic solvent. Examples of the hydrophobic solvent include toluene, xylene, and butyl acetate.

In the step 2, the mixture is dispersed in water to prepare a dispersion liquid in which organic components including the compound having a catalytic activity (such as metal compound) and the polyamine compound are dispersed in water.

The method for preparing the dispersion liquid is not particularly limited, and examples thereof include a method in which the mixture is added dropwise into water while conducting stirring.

The rate of dropwise addition is not particularly limited, and may be appropriately adjusted such that the oil droplets composed of the organic components have a desired size.

The temperature is not particularly limited, and, for example, the dropwise addition may be carried out at room temperature (at a temperature of about 5°C to 35°C).

After the end of the dropwise addition, the mixture is stirred for 1 minute to 30 minutes to obtain a dispersion liquid in which the organic components are homogeneously dispersed.

In the step 3, the water-dispersible polyisocyanate is added dropwise into the dispersion liquid while conducting stirring. Thus, the water-dispersible polyisocyanate added to the reaction system disperses in water, approaches and reacts with oil droplets containing the polyamine compound, and forms a polyurea film at the interface between the oil droplets and water, as a result of which the compound having a catalytic activity is coated with a polyurea film. Here, the mixing ratio (mass ratio) of the water-dispersible polyisocyanate (component having a solid content of 100% by mass) and the compound having a catalytic activity (water-dispersible polyisocyanate: compound having a catalytic activity) is preferably 5:1 to 1:5 and more preferably 3:1 to 1:3. In the case where the mixing ratio of the compound having a catalytic activity and the polyamine compound is within the above-mentioned range, there is a tendency in which both the storage stability and the low-temperature curability are achieved.

Although the temperature at which the polyisocyanate is added is not particularly limited, the temperature is preferably 0°C to 80°C, and more preferably 20°C to 40°C. In the case where the temperature is the above-mentioned lower limit or more, the formation rate of the polyurea film can be maintained more sufficiently. In contrast, in the case where the temperature is the above-mentioned upper limit or less, the local reaction is suppressed and finer capsules can be formed.

Furthermore, the reaction time after the addition of the polyisocyanate is preferably 15 minutes to 120 minutes, and more preferably 30 minutes to 60 minutes.

The median diameter of the obtained encapsulated thermally-latent catalyst is preferably 10 nm to 3 μm, more preferably 30 nm to 2 μm, even more preferably 50 nm to 1 μm, and even more preferably 50 nm to 200 nm. In the case where the median diameter is the above-mentioned lower limit or more, the aggregation stability can be further maintained. In contrast, in the case where the median diameter is the above-mentioned upper limit or less, the smoothness of the cured coating film formed using the encapsulated thermally-latent catalyst can be further maintained.

The median diameter referred to here is a number-based 50% diameter ($D_{50}$) measured from an integrated

distribution curve using a laser diffraction / scattering type particle size distribution measuring device ("Microtrack NANOTRACK UPA-EX150" manufactured by MicrotrackBEL Corp.).

In the encapsulated thermally-latent catalyst of the present embodiment, the amount of the compound having a catalytic activity (such as metal compound), relative to the total mass of the solid content of the encapsulated thermally-latent catalyst, may be, for example, 1% by mass to 60% by mass, 5% by mass to 50% by mass, 10% by mass to 40% by mass, or 20% by mass to 35% by mass.

The encapsulated thermally-latent catalyst of the present embodiment may be used in a state in which the encapsulated thermally-latent catalyst is dispersed in water or an organic solvent such as toluene, xylene, or butyl acetate.

The amount of the encapsulated thermally-latent catalyst in the dispersion liquid relative to the total mass of the solid content of the dispersion liquid may be, for example, 1% by mass to 50% by mass, 5% by mass to 45% by mass, 10% by mass to 40% by mass, or 20% by mass to 35% by mass.

<Other components>

The polyurethane-based hardener of the present embodiment may further contain at least one selected from the group consisting of other hardeners, antioxidants, light stabilizers, polymerization inhibitors and surfactants. Among them, it is preferable to further contain a surfactant.

Examples of the other hardeners include melamine resins, urea resins, epoxy group-containing compounds or resins, carboxy group-containing compounds or resins, acid anhydrides, alkoxysilane group-containing compounds or resins, and hydrazide compounds.

Examples of the antioxidants and light stabilizers include aliphatic, aromatic or alkyl group-substituted aromatic esters of phosphoric acid or phosphorus acid, and hypophosphorous acid derivatives; phosphorous compounds, such as phenylphosphonic acid, phenylphosphinic acid, diphenylphosphonic acid, polyphosphonate, dialkylpentaerythritol diphosphate, and dialkylbisphenol A diphosphate; phenol-based derivatives (particularly, hindered phenol compounds); sulfur-containing compounds such as thioether-based compounds, dithionate-based compounds, mercaptobenzimidazole-based compounds, thiocarbanilide-based compounds, and thiodipropionate esters; and tin-based compounds such as tin malate and dibutyltin monoxide. One of these may be contained alone or at least two thereof may be contained.

Examples of the polymerization inhibitors include hydroquinones, phenols, cresols, catechols, and benzoquinones. Specific examples of the polymerization inhibitors include benzoquinone, p-benzoquinone, p-toluquinone, p-xyloquinone, naphthoquinone, 2,6-dichloroquinone, hydroquinone, trimethylhydroquinone, catechol, p-tert-butylcatechol, 2,5-di-tert-butylhydroquinone, monomethylhydroquinone, p-methoxyphenol, 2,6-di-tert-butyl-p-cresol, and hydroquinone monomethyl ether. One of these may be contained alone, or at least two thereof may be contained.

Examples of the surfactants include conventionally-known anionic surfactants, cationic surfactants, and ampholytic surfactants.

«Coating composition»

Hereinafter, a two-liquid type coating composition, a solvent-based one-liquid type coating composition, and an aqueous one-liquid type coating composition may be generally referred to as coating composition.

<Amount of encapsulated thermally-latent catalyst>

The coating composition of the present embodiment includes the above-mentioned polyurethane-based hardener. Since the coating composition of the present embodiment includes the above-mentioned polyurethane-based hardener, the coating composition has excellent storage stability and low-temperature curability, and can form a coating film having excellent scratch resistance.

Although the amount of the encapsulated thermally-latent catalyst in the coating composition of the present embodiment is not particularly limited, the amount of the compound having a catalytic activity (such as a metal compound) included in the encapsulated thermally-latent catalyst relative to the total mass of the solid content of the coating composition is preferably 0.01% by mass to 10.0% by mass, more preferably 0.05% by mass to 5.0% by mass, even more preferably 0.1% by mass to 3.5% by mass, particularly preferably 0.3% by mass to 2.5% by mass, and most preferably 0.5% by mass to 2.0% by mass.

In the case where the amount of the encapsulated thermally-latent catalyst is the above-mentioned lower limit or more, the catalytic activity can be further sufficiently exhibited, and the low-temperature curability and the scratch resistance when made into a coating film can be further improved. In contrast, in the case where the amount of the encapsulated thermally-latent catalyst is the above-mentioned upper limit or less, the storage stability of a coating composition can be further improved.

In the coating composition of the present embodiment, a polyvalent active hydrogen-containing compound is

blended. Although the solid content of the polyvalent active hydrogen-containing compound in the coating composition of the present embodiment relative to the total mass of a coating composition is not particularly limited, the amount is preferably 10% by mass to 50% by mass, more preferably 20% by mass to 40% by mass, and even more preferably 23% by mass to 35% by mass. In the case where the amount is within the above-mentioned range, the low-temperature curability tends to be improved.

<Kit of two-liquid type coating composition>

A kit of a two-liquid type coating composition of the present embodiment includes the above-mentioned polyurethane-based hardener and a polyvalent active hydrogen compound.

[Polyvalent active hydrogen-containing compound]

Although the polyvalent active hydrogen-containing compound is not particularly limited, examples thereof include polyols, polyamines, and alkanolamines. One of these polyvalent active hydrogen-containing compounds may be included alone, or at least two thereof may be included in combination. Among them, the polyvalent active hydrogen-containing compound is preferably a polyol.

(Polyol)

Examples the polyol include polyester polyol, polyether polyol, acrylic polyol, polyolefin polyol, fluorinated polyol, polycarbonate polyol, and polyurethane polyol. One of these polyols may be contained alone, or at least two thereof may be contained in combination.

Among them, the polyol is preferably a polyester polyol or an acrylic polyol.

1. Polyester polyol

The polyester polyol may be obtained, for example, by condensation reaction of either one dibasic acid or a mixture of at least two dibasic acids with either one polyvalent alcohol or a mixture of at least two polyvalent alcohols.

Examples of the dibasic acid include carboxylic acids such as succinic acid, adipic acid, dimer acid, maleic anhydride, phthalic anhydride, isophthalic acid, terephthalic acid, and 1,4-cyclohexanedicarboxylic acid.

Examples of the polyvalent alcohol include ethylene glycol, propylene glycol, diethylene glycol, 1,4-butanediol, neopentyl glycol, 1,6-hexanediol, trimethylpentanediol, cyclohexanediol, trimethylolpropane, glycerin, pentaerythritol, 2-methylolpropanediol, and ethoxylated trimethylolpropane.

Alternatively, polycaprolactones obtained by, for example, subjecting lactones such as ε-caprolactone to ring-opening polymerization using polyvalent alcohol may also be used as the polyester polyols.

2. Polyether polyol

Although the polyether polyols are not particularly limited, examples thereof include the following (1) to (3).

(1) Polyether polyols obtained by random or block addition of one alkylene oxide or a mixture of alkylene oxides to one polyvalent hydroxyl-containing compound or a mixture of polyvalent hydroxyl-containing compounds using a catalyst.

Examples of the catalyst include hydroxides (such as hydroxides of lithium, sodium, or potassium), strong basic catalysts (such as alcoholates and alkylamines), and composite metal cyanide complexes (such as metal porphyrin, and zinc hexacyanocobaltate complex).

Examples of the alkylene oxide include ethylene oxide, propylene oxide, butylene oxide, cyclohexene oxide, and styrene oxide.

(2) Polyether polyols obtained by reacting an alkylene oxide with a polyamine compound.

Examples of the polyamine compound include ethylenediamine.

Examples of the alkylene oxide include the same as those mentioned in (1).

(3) Polymer polyols obtained by polymerizing acrylamide using as a medium the polyether polyol (1) or (2).

Examples of the polyvalent hydroxyl-containing compound include the following (i) to (vi).

(i) Diglycerin, ditrimethylolpropane, pentaerythritol, and dipentaerythritol.

(ii) Sugar alcohol-based compounds such as erythritol, D-threitol, L-arabinitol, ribitol, xylitol, sorbitol, mannitol, galactitol, and rhamnitol.

(iii) Monosaccharides such as arabinose, ribose, xylose, glucose, mannose, galactose, fructose, sorbose, rhamnose, fucose, and ribodesose.

(iv) Disaccharides such as trehalose, sucrose, maltose, cellobiose, gentiobiose, lactose, and melibiose.

(v) Trisaccharides such as raffinose, gentianose, and melicitose.

(vi) Tetrasaccharides such as stachyose.

3. Acrylic polyol

Although the acrylic polyol is not particularly limited, examples thereof include ones obtained, for example, by copolymerizing either one ethylenically unsaturated bond-containing monomer having a hydroxyl group or a mixture of ethylenically unsaturated bond-containing monomers having a hydroxyl group with either another ethylenically unsaturated bond-containing monomer copolymerizable therewith or a mixture of other ethylenically unsaturated bond-containing monomers copolymerizable therewith.

Although the ethylenically unsaturated bond-containing monomer having a hydroxyl group is not particularly limited, examples thereof include hydroxyethyl acrylate, hydroxypropyl acrylate, hydroxybutyl acrylate, hydroxyethyl methacrylate, hydroxypropyl methacrylate, and hydroxybutyl methacrylate. One of these may be used alone or at least two thereof may be used in combination. Among them, hydroxyethyl acrylate or hydroxyethyl methacrylate is preferable.

Examples of the other ethylenically unsaturated bond-containing monomers copolymerizable with the above-mentioned monomer include the following (1) to (6). One of these may be used alone or at least two thereof may be used in combination.

(1) Acrylic esters such as methyl acrylate, ethyl acrylate, propyl acrylate, isopropyl acrylate, n-butyl acrylate, isobutyl acrylate, n-hexyl acrylate, cyclohexyl acrylate, 2-ethylhexyl acrylate, lauryl acrylate, benzyl acrylate, and phenyl acrylate.

(2) Methacrylic esters such as methyl methacrylate, ethyl methacrylate, propyl methacrylate, isopropyl methacrylate, n-butyl methacrylate, isobutyl methacrylate, n-hexyl methacrylate, cyclohexyl methacrylate, 2-ethylhexyl methacrylate, lauryl methacrylate, benzyl methacrylate, and phenyl methacrylate.

(3) Unsaturated carboxylic acids such as acrylic acid, methacrylic acid, maleic acid, and itaconic acid.

(4) Unsaturated amides such as acrylamide, methacrylamide, N,N-methylene bisacrylamide, diacetone acrylamide, diacetone methacrylamide, maleic acid amide, and maleimide.

(5) Vinyl-based monomers such as glycidyl methacrylate, styrene, vinyl toluene, vinyl acetate, acrylonitrile, and dibutyl fumarate.

(6) Vinyl-based monomers having a hydrolyzable silyl group such as vinyltrimethoxysilane, vinylmethyldimethoxysilane, and $\gamma$-(meth)acryloxypropyltrimethoxysilane.

4. Polyolefin polyol

Although the polyolefin polyol is not particularly limited, examples thereof include polybutadiene having at least two hydroxyl groups, hydrogenated polybutadiene, polyisoprene, and hydrogenated polyisoprene.

The number of hydroxyl groups statically included in one polyol molecule (hereinafter, may be referred to as "average number of hydroxyl groups") is preferably at least two. In the case where the average number of hydroxyl groups of a polyol is at least two, there is a tendency in which the decrease in the cross-link density of the coating film formed by curing the one-liquid type coating composition of the present embodiment is further suppressed.

5. Fluorinated polyol

In the present specification, the term "fluorinated polyol" refers to a polyol containing fluorine in a molecule thereof. Specific examples of the fluorinated polyol include copolymers disclosed in Japanese Unexamined Patent Application, First Publication No. Sho 57-34107 (Reference Document 1), or Japanese Unexamined Patent Application, First Publication No. Sho 61-275311 (Reference Document 2), such as fluoroolefins, cyclic vinyl ethers, hydroxyalkylvinyl ethers, and vinyl monocarboxylates.

6. Polycarbonate polyol

Although the polycarbonate polyol is not particularly limited, examples thereof include the following (1) to (4).

(1) Dialkyl carbonates such as dimethyl carbonate.

(2) Alkylene carbonates such as ethylene carbonate.
(3) Diaryl carbonates such as diphenyl carbonate.
(4) Ones obtained by condensation polymerization of the above-mentioned low-molecular-weight carbonates (1) to (3).

7. Polyurethane polyol

Although the polyurethane polyol is not particularly limited, the polyurethane polyol may be obtained by, for example, conventionally reacting a polyol which does not have any carboxy groups with an isocyanate component.
Examples of the polyol which does not have any carboxy groups include: low-molecular-weight ones such as ethylene glycol and propylene glycol; and high-molecular-weight ones such as acrylic polyol, polyester polyol, and polyether polyol.

(Hydroxyl value of polyol)

Although there are no particular limitations on the hydroxyl value of the polyol per resin, the hydroxyl value is preferably 10 mgKOH/g resin to 300 mgKOH/g resin.
In the case where the hydroxyl value per resin is the above-mentioned lower limit or more, there is a tendency in which the decrease in the cross-link density is suppressed and intended physical properties can be further sufficiently achieved. In the case where the hydroxyl value per resin is the above-mentioned upper limit or less, there is a tendency in which an excessive increase in the cross-link density is suppressed, and the mechanical physical property of a coating film formed by curing the one-liquid type coating composition of the present embodiment can be further improved.
The hydroxyl value of polyol may be measured in accordance with JIS K1557.

(Polyamine)

Although the polyamine is not particularly limited, the polyamine preferably has at least two primary amino groups or secondary amino groups in one molecule thereof, and more preferably has at least three primary amino groups or secondary amino groups in one molecule thereof.
Specific examples of the polyamine include the following (1) to (3).

(1) Diamines, such as ethylenediamine, propylenediamine, butylenediamine, triethylenediamine, hexamethylenediamine, 4,4' -diaminodicyclohexylmethane, piperazine, 2-methylpiperazine, and isophorone diamine.
(2) Chained polyamines having at least three amino groups, such as bishexamethylene triamine, diethylenetriamine, triethylenetetramine, tetraethylenepentamine, pentamethylenehexamine, and tetrapropylenepentamine.
(3) Cyclic polyamines such as 1,4,7,10,13,16-hexaazacyclooctadecane, 1,4,7,10-tetraazacyclodecane, 1,4,8,12-tetraazacyclopentadecane, and 1,4,8,11-tetraazacyclotetradecane.

(Alkanolamine)

In the present specification, the term "alkanolamine" refers to a compound having both an amino group and a hydroxyl group in one molecule thereof.
Specific examples of the alkanolamine include monoethanolamine, diethanolamine, aminoethylethanolamine, N-(2-hydroxypropyl)ethylenediamine, mono-, di-(n- or iso-)propanolamine, ethylene glycol bis-propylamine, neopentanolamine, and methylethanolamine

[Other urethane-forming catalyst]

The kit of a two-liquid type coating composition of the present embodiment may further include another urethane-forming catalyst within a range in which the storage stability is not adversely affected.
The urethane-forming catalyst may be a basic compound or a Lewis acid compound.
Examples of the basic compound include metal hydroxides, metal alkoxides, metal acetylacetinates, hydroxides of onium salts, halides of onium salts, metal salts of active methylene compounds, onium salts of active methylene compounds, aminosilanes, amines, and phosphines. Preferable examples of the onium salts include ammonium salts, phosphonium salts and sulfonium salts.
Examples of the Lewis acid compound include organic tin compounds, organic zinc compounds, organic titanium compounds, and organic zirconium compounds.

[Other resin components]

The kit of a two-liquid type coating composition of the present embodiment may further include other resin components such as a conventional melamine resin, epoxy resin, or polyurethane resin, as needed.

[Other additives]

In the case where the kit of a two-liquid type coating composition of the present embodiment contains a polyol having a carboxy group, the kit of a two-liquid type coating composition may further include, as a hardener component, another hardener such as an oxazoline group-containing compound or a carbodiimide group-containing compound. One of these compounds may be contained alone, or at least two thereof may be contained in combination.

In the case where the kit of a two-liquid type coating composition of the present embodiment includes a polyol having a carbonyl group, the kit of a two-liquid type coating composition may further include, as the hardener component, another hardener such as a hydrazide group-containing compound or a semicarbazide group-containing compound. One of these compounds may be included alone, or at least two thereof may be included in combination.

The kit of a two-liquid type coating composition of the present embodiment may further include other additives such as antioxidants, ultraviolet absorbers (light stabilizers), pigments, metal powdered pigments, rheology-controlling agents, curing-promoting agents, surfactants, or solvents, as needed.

Examples of the antioxidants, the light stabilizers, the surfactants, and the solvents include the same as those mentioned in the blocked polyisocyanate composition above.

Examples of the pigments include titanium oxide, carbon black, indigo, quinacridone, and pearl mica.

Examples of the metal powdered pigments include aluminum.

Examples of the rheology-controlling agents include hydroxyethyl cellulose, urea compounds, and microgels.

Examples of the curing-promoting agents include organic metal compounds other than the above-mentioned urethane-forming catalysts. Examples of metal constituting the organic metal compound include tin, zinc, and lead.

<(Solvent-based / aqueous) one-liquid type coating composition>

A solvent-based one-liquid type coating composition of the present embodiment includes: a polyurethane hardener including the above-mentioned encapsulated thermally-latent catalyst and a blocked polyisocyanate; and a polyvalent active hydrogen-containing compound.

An aqueous one-liquid type coating composition of the present embodiment includes: a polyurethane-based hardener including the above-mentioned encapsulated thermally-latent catalyst and a water-dispersible hydrophilic blocked polyisocyanate; and a polyvalent active hydrogen-containing compound.

Examples of the polyvalent active hydrogen-containing compound include the same compounds as those mentioned for the "kit of a two-liquid type coating composition" described above.

The solvent-based or aqueous one-liquid type coating composition of the present embodiment may further include another urethane-forming catalyst within a range in which the storage stability is not adversely affected. Examples of another urethane-forming catalyst include the same as those mentioned for the "two-liquid type coating composition" described above.

The solvent-based or aqueous one-liquid type coating composition of the present embodiment may further include another resin component or another additive. Examples of another resin component and another additive include the same as those mentioned for the "two-liquid type coating composition" described above.

<Method for producing coating composition>

The two-liquid type coating composition of the present embodiment is obtained by mixing the polyurethane-based hardener and the polyvalent active hydrogen-containing compound, which are included in the above-mentioned kit of a two-liquid type coating composition, with, as needed, another resin component, another additive, or the like, by a conventionally-known method.

In order to obtain the solvent-based one-liquid type coating composition of the present embodiment, another resin component or another additive is added to either the polyvalent active hydrogen-containing compound or a solvent dilution thereof, as needed, at first. Then, the above-mentioned polyurethane-based hardener is added to the resultant, and a solvent is further added thereto, as needed, to adjust the viscosity. Then, the resultant is stirred by hand or using a stirrer such as mazelar to obtain a solvent-based one-liquid type coating composition.

The above-mentioned viscosity is preferably adjusted such that the plunge time measured at 23°C in accordance with ASTM D-1200 using a Ford cup No. 4 is approximately 13 seconds to 30 seconds, and more preferably approximately 16 seconds to 25 seconds.

Alternatively, in order to obtain the solvent-based one-liquid type coating composition of the present embodiment, another resin component or another additive is added to either the polyvalent active hydrogen-containing compound or a solvent dilution thereof, as needed, at first. Then, the above-mentioned blocked polyisocyanate is added to the resultant, and a solvent is further added thereto, as needed, to adjust the viscosity. Then, the resultant is stirred by hand or using a stirrer such as mazelar. Thereafter, the above-mentioned encapsulated thermally-latent catalyst is added to the resultant, and then the mixture is further stirred to obtain a solvent-based one-liquid type coating composition.

In order to obtain the aqueous one-liquid type coating composition of the present embodiment, another resin component or another additive is added to the polyvalent hydroxyl-containing compound, an aqueous dispersion thereof, or an aqueous solution thereof, as needed, at first. Then, the above-mentioned polyurethane-based hardener is added to the resultant, and water or a solvent is further added thereto, as needed, to adjust the viscosity. Then, the resultant is forcibly stirred using a stirrer to obtain an aqueous one-liquid type coating composition.

The above-mentioned viscosity is preferably adjusted such that the plunge time measured at 23°C in accordance with ASTM D-1200 using a Ford cup No. 4, for example, is approximately 15 seconds to 30 seconds, and more preferably approximately 18 seconds to 25 seconds.

Alternatively, in order to obtain the aqueous one-liquid type coating composition of the present embodiment, another resin component or another additive is added to the polyvalent hydroxyl-containing compound, an aqueous dispersion thereof, or an aqueous solution thereof, as needed, at first. Then, the above-mentioned hydrophilic blocked polyisocyanate or an aqueous dispersion thereof is added to the resultant, and water or a solvent is further added thereto, as needed, to adjust the viscosity. Then, the resultant is forcibly stirred using a stirrer. Then, the above-mentioned encapsulated thermally-latent catalyst is added to the resultant while conducting stirring, and then the mixture is further stirred to obtain the aqueous one-liquid type coating composition.

<Usage>

The coating composition of the present embodiment is preferably used as a primer, intermediate, or upper coating material to be applied on metal such as a steel plate or surface-treated steel plate, plastic, ceramic such as inorganic material, glass, of concrete, by roll coating, curtain flow coating, spray coating, electrostatic coating, bell coating, immersion, roller coating, brush coating or the like.

The coating composition of the present embodiment is preferably used to impart an aesthetically pleasing appearance, weather resistance, acid resistance, rust resistance, chipping resistance, adhesiveness, or the like, to a precoat metal such as an anti-rust steel plate, a vehicle coated part, a plastic-coated part, or the like.

Moreover, the coating composition of the present embodiment is also useful as an adhesive, tackifier, elastomer, foam, surface-treating agent, or the like.

<<Coating film>>

A coating film of the present embodiment is formed by curing the above-mentioned coating composition. The coating film of the present embodiment has excellent low-temperature curability and scratch resistance. The coating film of the present embodiment is formed by coating the above-mentioned coating composition using a conventionally-known method such as roll coating, curtain flow coating, spray coating, bell coating, electrostatic coating, or the like, followed by drying at ordinary temperature or conducting a baking step to cure the coating composition.

The coating film formed by curing the coating composition has a urethane bond. Therefore, the coating film formed from the above-mentioned coating composition tends to have excellent chemical resistance, heat resistance, and water resistance, which are characteristics of a general urethane cross-linked coating film.

«Coated article»

A coated article of the present embodiment includes the above-mentioned coating film. Since the coated article of the present embodiment includes the above-mentioned coating film, the low-temperature curability and the scratch resistance are excellent.

The coated article of the present embodiment has the coating film having excellent chemical resistance, heat resistance, and water resistance, and an aesthetically pleasing appearance, acid resistance, rust resistance, chipping resistance, adhesiveness, or the like is further impaired thereto.

EXAMPLES

Hereinafter, the present embodiment will be described with reference to examples, but the present invention is not limited to the following examples.

The measurement method of each physical property and each evaluation method will be described below. The terms "part" and "%" indicate "part by mass" and "% by mass" respectively, unless particularly mentioned.

<Measurement method and evaluation method>

[Physical property 1]

(Isocyanate group (NCO) content of polyisocyanate)

About 1 g to 3 g of a polyisocyanate was accurately weighed (W g) in a conical flask, and then 20 ml of toluene was added thereto to dissolve the polyisocyanate therein. Then, 10 mL of a toluene solution of 2N di-n-butylamine was added thereto, and then mixed, followed by leaving the mixture at room temperature for 15 minutes. Then, 70 mL of isopropyl alcohol was added thereto, and then mixed. Then, the resultant liquid was subjected to titration with a 1N hydrochloric acid solution (Factor F) using an indicator to obtain a titration value V2 mL. Then, a titration value V1 mL was obtained by titration conducted in a similar manner to that described above except that no polyisocyanate was used. Then, the isocyanate group (NCO) content of polyisocyanate was calculated in accordance with the following equation.

$$\text{NCO content (\% by mass)} = (V1 - V2) \times F \times 42 / (W \times 1000) \times 100$$

[Physical property 2]

(Solid content of blocked polyisocyanate composition)

The solid content of the blocked polyisocyanate composition was determined as described below.

The weight of an aluminum plate having a bottom diameter of 38 mm was accurately measured. Then, approximately 1 g of a blocked polyisocyanate composition prepared in an example or comparative example was placed on the aluminum plate, and the weight thereof (W1) was accurately measured. Then, the thickness of the blocked polyisocyanate composition was adjusted to be uniform. Then, the blocked polyisocyanate composition placed on the aluminum plate was maintained at 105°C in an oven for one hour. Then, when the temperature of the aluminum plate decreased to room temperature, the weight (W2) of the blocked polyisocyanate composition remaining on the aluminum plate was accurately measured. Then, the solid content of the blocked polyisocyanate composition was calculated in accordance with the following equation.

$$\text{Solid content (\% by mass) of blocked polyisocyanate composition} = W2/W1 \times 100$$

[Physical property 3]

(Effective isocyanate group (NCO) content of blocked polyisocyanate composition)

The effective isocyanate group (NCO) content of the blocked polyisocyanate composition was determined as mentioned below.

The term "effective isocyanate group (NCO) content" used herein refers to the quantified amount of the blocked isocyanate groups that can participate in the crosslinking reaction and that are present in the blocked polyisocyanate composition after the blocking reaction, and is indicated by % by mass of the isocyanate groups.

The effective NCO content was calculated by the following equation. In the following equation, the values calculated in the physical property 1 and the physical property 2 were used as "NCO%" and "solid content of blocked polyisocyanate composition", respectively. In the case where a sample was diluted with a solvent or the like, the value was calculated in the diluted state.

$$\text{Effective NCO content (\% by mass)} = [(\text{Solid content (\% by mass) of blocked polyisocyanate composition}) \times \{(\text{mass of polyisocyanate used in blocking reaction}) \times \text{NCO\%}\}] / (\text{mass of blocked polyisocyanate composition after blocking reaction})$$

[Physical property 4]

(Median diameter $D_{50}$ of encapsulated thermally-latent catalyst)

The median diameter $D_{50}$ of the resultant encapsulated thermally-latent catalyst was measured using UPA-EX150 (manufactured by MicrotrackBEL Corp.) after diluting the encapsulated thermally-latent catalyst with ion-exchanged water to 1% by mass.

[Evaluation 1]

(Low-temperature curability of two-liquid type coating composition)

Each two-liquid type coating composition prepared in example or comparative example was coated on a polypropylene (PP) plate using an air spray gun such that the dried coating film thickness became 30 μm, and then dried at 23°C for 15 minutes. Then, the resultant was baked at 60°C for 60 minutes to obtain a cured coating film. The resultant cured coating film was left at 23°C for one hour, and then removed from the PP plate. Then, the mass of the resultant (hereinafter, abbreviated as "mass before immersion") was accurately weighed, and then the resultant was immersed in acetone at 20°C for 24 hours. Then, the mass after immersion (hereinafter, abbreviated as "mass of undissolved portion") was accurately weighed. Then, the ratio (gel fraction) of the mass of undissolved portion to the mass before immersion was calculated. Then, the calculated gel fraction was used to evaluate the low-temperature curability in accordance with the following evaluation criteria.

(Evaluation criteria)

A: The gel fraction was 80% by mass or more.
B: The gel fraction was 50% by mass to less than 80% by mass.
C: The gel fraction was less than 50% by mass.

[Evaluation 2]

(Storage stability of two-liquid type coating composition)

Each resultant two-liquid type coating composition was diluted with butyl acetate to adjust an initial viscosity such that the initial plunge time measured at 23°C using a Ford cup No. 4 was 15 seconds. Then, the resultant was stored at 23°C while measuring the viscosity thereof every 0.5 hours to determine the time when the plunge time of the Ford cup No. 4 exceeded 30 seconds, and the storage stability was evaluated in accordance with the following evaluation criteria.

(Evaluation criteria)

A: The plunge time was 3 hours or more.
B: The plunge time was 2 hours to less than 3 hours.
C: The plunge time was less than 2 hours.

[Evaluation 3]

(Low-temperature curability of one-liquid type coating composition)

Each one-liquid type coating composition prepared in example or comparative example was coated on a polypropylene (PP) plate using an air spray gun such that the dried coating film thickness became 30 μm, and then dried at 23°C for 15 minutes. Then, the resultant was baked at a predetermined temperature for 30 minutes to obtain a cured coating film. The resultant cured coating film was left at 23°C for one hour, and then removed from the PP plate. Then, the mass of the resultant (hereinafter, abbreviated as "mass before immersion") was accurately weighed, and then the resultant was immersed in acetone at 20°C for 24 hours. Then, the mass after immersion (hereinafter, abbreviated as

"mass of undissolved portion") was accurately weighed. Then, the ratio (gel fraction) of the mass of undissolved portion to the mass before immersion was calculated. Then, the calculated gel fraction was used to evaluate the low-temperature curability in accordance with the following evaluation criteria.

(Evaluation criteria)

A: The gel fraction was 80% by mass or more at 100°C.
B: The gel fraction was 80% by mass or more at 110°C.
C: The gel fraction was less than 80% by mass at 110°C.

[Evaluation 4]

(Storage stability of one-liquid type coating composition)

Each resultant one-liquid type coating composition was stored at 40°C for ten days, and then the external appearance was evaluated in accordance with the following evaluation criteria.

(Evaluation criteria)

A: No significant change was confirmed.
B: Although the external appearance was uniform, the viscosity increase was confirmed, or alternatively a significant separation was confirmed.
C: Gelation was confirmed.

[Evaluation 5]

(Scratch resistance)

Each two-liquid type coating composition or each one-liquid type coating composition prepared in example or comparative example was coated on a polypropylene (PP) plate using an air spray gun such that the dried coating film thickness became 30 μm, and then dried at 23°C for 15 minutes. Then, the resultant was baked at 110°C for 30 minutes to obtain a cured coating film. The initial gloss (G0) of each resultant coating film was measured, at first. Then, the coated surface (where the initial gloss (G0) was measured) was scratched by making 20 round trips using a four-row brass brush manufactured by Industry Kowa Co., Ltd., in parallel with the handle thereof with a load of 600 g at a stroke speed of 30 cm/second for a stroke width of 5 cm.

Then, the sample used in the above-mentioned scratch resistance evaluation was left in a constant temperature room at 23°C for 24 hours. After 24 hours, the gloss (G1) of the scratched portion was measured. Then, the gloss retention rate was calculated using the following equation, and the scratch resistance was evaluated in accordance with the following evaluation criteria.

$$\text{Gloss retention rate } [\%] = (G1/G0) \times 100$$

(Evaluation criteria)

A: The gloss retention rate was 90% or more.
B: The gloss retention rate was 80% to less than 90%.
C: The gloss retention rate was less than 80%.

<Synthesis of polyisocyanate>

[Synthesis Example 1-1]

(Synthesis of polyisocyanate P-1)

1000 parts by mass of HD1 and 2 parts by mass of 2-ethylhexane-1,3-diol were charged in a four-necked flask equipped with a thermometer, a stirrer blade, and a reflux cooling tube under a nitrogen gas stream, and the temperature in the reaction container was maintained at 70°C while stirring the mixture. Tetramethylammonium hydroxide was added to the resultant, followed by adding phosphoric acid to the resultant when the NCO content of the reaction liquid at 25°C became 38.7% by mass, so as to terminate the reaction. The reaction liquid was filtered, and then unreacted HDI was removed therefrom using a thin-film distillation device to obtain a polyisocyanate P-1 having an NCO content of 21.8% by mass.

[Synthesis Example 1-2]

(Synthesis of water-dispersible polyisocyanate P-2)

15.5 parts by mass of polyethylene glycol monomethyl ether, in which the average number of ethylene oxide repeating units was 9.0, (manufactured by NIPPON NYUKAZAI CO., LTD., under the trade name of "MPG-130") was added to 100 parts by mass of the polyisocyanate P-1 obtained in the Synthesis Example 1-1 in a four-necked flask equipped with a thermometer, a stirrer blade, and a reflux cooling tube under a nitrogen gas stream, followed by stirring the mixture at 100°C for 4 hours under a nitrogen atmosphere to allow the reaction to proceed. After the reaction was terminated, the water-dispersible polyisocyanate P-2 having an NCO content of 17.5% by mass was obtained.

[Synthesis Example 1-3]

(Synthesis of water-dispersible polyisocyanate P-3)

100 parts by mass of isophorone diisocyanate-based polyisocyanurate (manufactured by Evonik under the trade name of "T1890/100"), 64 parts by mass of dipropylene glycol dimethyl ether (manufactured by Dow Chemical under the trade name of "DMM"), and 12.3 parts by mass of polyethylene glycol monomethyl ether, in which the average number of ethylene oxide repeating units was 9.0, (manufactured by NIPPON NYUKAZAI CO., LTD., under the trade name of "MPG-130") were put in a four-necked flask equipped with a thermometer, a stirrer blade, and a reflux cooling tube under a nitrogen gas stream, followed by stirring the mixture at 100°C for 4 hours under a nitrogen atmosphere to allow the reaction to proceed. After the reaction was terminated, the water-dispersible polyisocyanate P-3 having an NCO content of 9.1% by mass was obtained.

<Synthesis of blocked polyisocyanate composition>

[Synthesis Example 2-1]

(Preparation of blocked polyisocyanate composition BL-1)

17.8 parts by mass of 1,2,4-triazole was added gradually to 100 parts by mass of the polyisocyanate P-1 obtained in Synthesis Example 1-1 in a four-necked flask equipped with a stirrer, a thermometer, a reflux cooling tube, and a nitrogen inlet tube under a nitrogen atmosphere, followed by stirring the mixture for 3 hours at a temperature of 100°C to 110°C to allow the reaction to proceed. After the liquid temperature was lowered to 60°C or less, 53.5 parts by mass of diisopropyl malonate and 106.1 parts by mass of propylene glycol monomethyl ether acetate (PMA) were added to the resultant, and then a methanol solution containing sodium methylate (28% by mass) was further added thereto such that the sodium content relative to the solid content in the reaction solution was 0.05% by mass, followed by allowing the reaction to proceed at 75°C to 80°C for two hours to obtain a blocked polyisocyanate composition BL-1.

[Synthesis Example 2-2]

(Preparation of blocked polyisocyanate composition BL-2)

17.8 parts by mass of 1,2,4-triazole was added gradually to 100 parts by mass of the polyisocyanate P-1

obtained in Synthesis Example 1-1 in a four-necked flask equipped with a stirrer, a thermometer, a reflux cooling tube, and a nitrogen inlet tube under a nitrogen atmosphere, followed by stirring the mixture for 3 hours at a temperature of 100°C to 110°C to allow the reaction to proceed. After the liquid temperature was lowered to 80°C or less, 26.0 parts by mass of 3,5-dimethylpyrazole and 93.9 parts by mass of PMA were added to the resultant, and then a methanol solution containing sodium methylate (28% by mass) was further added thereto such that the sodium content relative to the solid content in the reaction solution was 0.05% by mass, followed by allowing the reaction to proceed at 75°C to 80°C for two hours to obtain a blocked polyisocyanate composition BL-2.

Table 1

| | | | Synthesis Example 2-1 | Synthesis Example 2-2 |
|---|---|---|---|---|
| Blocked polyisocyanate composition | | - | BL-1 | BL-2 |
| Polyisocyanate | P-1 | parts by mass | 100 | 100 |
| Blocking agent | 1,2,4-triazole | parts by mass | 17.8 | 17.8 |
| | diisopropyl malonate | parts by mass | 53.5 | - |
| | 3,5-dimethylpyrazole | parts by mass | - | 26.0 |
| Solvent | PMA | parts by mass | 106.1 | 93.9 |
| Effective NCO content | | % by mass | 7.8 | 9.1 |
| Solid content | | % by mass | 60 | 60 |

<Synthesis of hydrophilic blocked polyisocyanate composition>

[Synthesis Example 2-3]

(Preparation of hydrophilic blocked polyisocyanate composition BL-3)

100 parts by mass of the polyisocyanate P-1 obtained in Synthesis Example 1-1 and 35.7 parts by mass of methoxy polyethylene glycol (manufactured by NIPPON NYUKAZAI CO., LTD., under the trade name of MPG- 081, the number of ethylene oxide repeating units was 15) were charged in a four-necked flask equipped with a stirrer, a thermometer, a reflux cooling tube, and a nitrogen inlet tube under a nitrogen atmosphere, and then the mixture was stirred while conducting heating at 120°C for two hours. After the reaction liquid was cooled to approximately 110°C or lower, 16.0 parts by mass of 1,2,4-triazole was added gradually thereto, and then the mixture was stirred at a temperature of 100°C to 110°C for three hours to allow the reaction to proceed. After the reaction temperature was lowered to 60°C or less, 48.1 parts by mass of diisopropyl malonate and 125.9 parts by mass of PMA were added to the resultant, and then a methanol solution containing sodium methylate (28% by mass) was further added thereto such that the sodium content relative to the solid content in the reaction solution was 0.05% by mass, followed by allowing the reaction to proceed at 75°C to 80°C for two hours to obtain a hydrophilic blocked polyisocyanate composition BL-3.

Table 2

| | | | Synthesis Example 2-3 |
|---|---|---|---|
| Water-dispersible blocked polyisocyanate composition | | - | BL-3 |
| Polyisocyanate | P-1 | parts by mass | 100 |
| Hydrophilic compound | MPG081 | parts by mass | 35.7 |
| Blocking agent | 1,2,4-triazole | parts by mass | 16.0 |
| | diisopropyl malonate | parts by mass | 48.1 |
| Solvent | PMA | parts by mass | 125.9 |
| Effective NCO content | | % by mass | 6.0 |
| Solid content | | % by mass | 60 |

<Preparation of encapsulated thermally-latent catalyst >

[Example 1-1]

(Preparation of aqueous dispersion liquid C-1 of an encapsulated thermally-latent catalyst and dispersion liquid C-1SB of an encapsulated thermally-latent catalyst in butyl acetate)

10 parts by mass of ion-exchanged water and 0.25 parts by mass of an anionic surfactant (manufactured by Nippon Nyukazai Co., Ltd., under the trade name of "NewCoal N2320-SN") (hereinafter, may be abbreviated as "N2320-SN") were put in a four-necked flask equipped with a stirrer, a thermometer, and a reflux cooling tube, and then stirred to produce a reaction system. An organic mixture liquid obtained by stirring and mixing 1.0 part by mass of a polyaspartic acid ester compound (manufactured by Covestro, under the trade name of "Desmophen 1420", the amine value thereof being 201 mgKOH/g resin) (hereinafter, may be abbreviated as "D1420"), 5.0 parts by mass of toluene and 1.0 part by mass of dioctyltin dilaurate (manufactured by NITTO KASEI CO., LTD., under the trade name of "NEOSTANN U-810") (hereinafter, may be abbreviated as "U-810") in advance was added dropwise into the reaction system over five minutes, and then the mixture was stirred for five minutes to disperse the organic mixture liquid in water. Then, 1.4 parts by mass of the water-dispersible polyisocyanate P-3 obtained in the Synthesis Example 1-3 was added dropwise into the resultant over ten minutes, and then the mixture was stirred for five minutes to obtain an aqueous dispersion liquid C-1 of the encapsulated thermally-latent catalyst (the solid content of which was 30% by mass). The median diameter of the encapsulated thermally-latent catalyst contained in the resultant aqueous dispersion liquid C-1 of the encapsulated thermally-latent catalyst was 90 nm.

Then, the resultant aqueous dispersion liquid C-1 of the encapsulated thermally-latent catalyst was diluted by further adding ion-exchanged water thereto such that the solid content was 10% by mass, followed by subjecting the resultant to centrifugal separation at 50,000 rpm for 30 minutes to separate an aqueous phase and an encapsulated thermally-latent catalyst. The resultant encapsulated thermally-latent catalyst was dried with a vacuum dryer at 30°C for 10 hours in a vacuum degree of 0.1 Torr. Then, 23 parts by mass of butyl acetate was added to 10 parts by mass of the resultant dried encapsulated thermally-latent catalyst, and then stirred for 10 minutes to obtain a dispersion liquid C-1SB of the encapsulated thermally-latent catalyst in butyl acetate (the solid content of which was 30% by mass).

[Example 1-2]

(Preparation of aqueous dispersion liquid C-2 of an encapsulated thermally-latent catalyst and dispersion liquid C-2SB of an encapsulated thermally-latent catalyst in butyl acetate)

10 parts by mass of ion-exchanged water and 0.25 parts by mass of N2320-SN were put in a four-necked flask equipped with a stirrer, a thermometer, and a reflux cooling tube, and then stirred to produce a reaction system. An organic mixture liquid obtained by stirring and mixing 1.0 part by mass of D1420, 1.0 part by mass of toluene and 4.0 parts by mass of a 2-ethylhexanoic acid solution containing 25% by mass of bismuth 2-ethylhexanoate (manufactured by NITTO KASEI CO., LTD., under the trade name of "NEOSTANN U-600") (hereinafter, may be abbreviated as "U-600") in advance was added dropwise into the reaction system over five minutes, and then the mixture was stirred for five minutes to disperse the organic mixture liquid in water. Then, 1.1 parts by mass of the water-dispersible polyisocyanate P-2 obtained in the Synthesis Example 1-2 was added dropwise into the resultant over ten minutes, and then the mixture was stirred for five minutes to obtain an aqueous dispersion liquid C-2 of the encapsulated thermally-latent catalyst (the solid content of which was 30% by mass). The median diameter of the encapsulated thermally-latent catalyst contained in the resultant aqueous dispersion liquid C-2 of the encapsulated thermally-latent catalyst was 110 nm.

Then, the resultant aqueous dispersion liquid C-2 of the encapsulated thermally-latent catalyst was diluted by further adding ion-exchanged water thereto such that the solid content was 10% by mass, followed by subjecting the resultant to centrifugal separation at 50,000 rpm for 30 minutes to separate an aqueous phase and an encapsulated thermally-latent catalyst. The resultant encapsulated thermally-latent catalyst was dried with a vacuum dryer at 30°C for 10 hours in a vacuum degree of 0.1 Torr. Then, 23 parts by mass of butyl acetate was added to 10 parts by mass of the resultant dried encapsulated thermally-latent catalyst, and then stirred for 10 minutes to obtain a dispersion liquid C-2SB of the encapsulated thermally-latent catalyst in butyl acetate (the solid content of which was 30% by mass).

[Example 1-3]

(Preparation of aqueous dispersion liquid C-3 of an encapsulated thermally-latent catalyst and dispersion liquid C-3SB of an encapsulated thermally-latent catalyst in butyl acetate)

10 parts by mass of ion-exchanged water and 0.25 parts by mass of N2320-SN were put in a four-necked flask equipped with a stirrer, a thermometer, and a reflux cooling tube, and then stirred to produce a reaction system. An organic mixture liquid obtained by stirring and mixing 1.0 part by mass of D1420, 1.0 part by mass of toluene and 4.0 parts by mass of U-600 in advance was added dropwise into the reaction system over five minutes, and then the mixture was stirred for five minutes to disperse the organic mixture liquid in water. Then, 1.4 parts by mass of the water-dispersible polyisocyanate P-3 obtained in the Synthesis Example 1-3 was added dropwise into the resultant over ten minutes, and then the mixture was stirred for five minutes to obtain an aqueous dispersion liquid C-3 of the encapsulated thermally-latent catalyst (the solid content of which was 30% by mass). The median diameter of the encapsulated thermally-latent catalyst contained in the resultant aqueous dispersion liquid C-3 of the encapsulated thermally-latent catalyst was 82 nm.

Then, the resultant aqueous dispersion liquid C-3 of the encapsulated thermally-latent catalyst was diluted by further adding ion-exchanged water thereto such that the solid content was 10% by mass, followed by subjecting the resultant to centrifugal separation at 50,000 rpm for 30 minutes to separate an aqueous phase and an encapsulated thermally-latent catalyst. The resultant encapsulated thermally-latent catalyst was dried with a vacuum dryer at 30°C for 10 hours in a vacuum degree of 0.1 Torr. Then, 23 parts by mass of butyl acetate was added to 10 parts by mass of the resultant dried encapsulated thermally-latent catalyst, and then stirred for 10 minutes to obtain a dispersion liquid C-3SB of the encapsulated thermally-latent catalyst in butyl acetate (the solid content of which was 30% by mass).

Table 3

| | | | Example 1-1 | Example 1-2 | Example 1-3 |
|---|---|---|---|---|---|
| Aqueous dispersion liquid of encapsulated thermally-latent catalyst | | - | C-1 | C-2 | C-3 |
| Ion-exchanged water | | parts by mass | 10.0 | 10.0 | 10.0 |
| Surfactant | N2320-SN | parts by mass | 0.25 | 0.25 | 0.25 |
| Organic metal compound | U-810 | parts by mass | 1.0 | - | - |
| | U-600 | parts by mass | - | 4.0 | 4.0 |
| Polyamine compound | D1420 | parts by mass | 1.0 | 1.0 | 1.0 |
| Solvent | Toluene | parts by mass | 5.0 | 1.0 | 1.0 |
| Water-dispersible polyisocyanate | P-2 | parts by mass | - | 1.1 | - |
| | P-3 | % by mass | 1.4 | - | 1.4 |
| Solid content in aqueous dispersion of catalyst | | % by mass | 30 | 30 | 30 |
| Amount of active ingredient of catalyst relative to solid content of encapsulated thermally-latent catalyst | | % by mass | 29 | 32 | 29 |
| Median diameter $D_{50}$ | | nm | 90 | 110 | 82 |

[Comparative Example 1-1]

(Preparation of aqueous dispersion liquid C-4 of an encapsulated thermally-latent catalyst)

10 parts by mass of ion-exchanged water and 0.25 parts by mass of an anionic surfactant (manufactured by Nippon Nyukazai Co., Ltd., under the trade name of "NewCoal N2320-SN") (hereinafter, may be abbreviated as "N2320-SN") were put in a four-necked flask equipped with a stirrer, a thermometer, and a reflux cooling tube, and then stirred to produce a reaction system.

An organic mixture liquid obtained by stirring and mixing 1.0 part by mass of toluene, 4.0 parts by mass of a 2-ethylhexanoic acid solution containing 25% by mass of bismuth 2-ethylhexanoate (manufactured by NITTO KASE1 CO., LTD., under the trade name of "NEOSTANN U-600") (hereinafter, may be abbreviated as "U-600") and 1.0 part by mass of diisononyl cyclohexane-1,2-dicarboxylate in advance was added dropwise into the reaction system over five minutes. After the dropwise addition was terminated, a mixture obtained by mixing 0.05 parts by mass of 1,4-butanediol diacrylate, 0.25 parts by mass of methyl methacrylate, and 0.2 parts by mass of methacrylic anhydride in advance was added dropwise to the resultant over five minutes. Then, the resultant was stirred for 40 minutes, as a result of which a stable emulsion was formed. Then, 0.01 parts by mass of tert-butyl peroxyneodecanoate was added to the resultant, followed by heating the mixture over 180 minutes to 75°C, and then maintaining the temperature for 60 minutes. Then, 0.05 parts by mass of an aqueous solution containing 10% by mass of tert-butyl hydroperoxide was added to the resultant, and then 0.13 parts by mass of an aqueous solution containing 3.85% by mass of ascorbic acid was added thereto over 60 minutes in a step of cooling the resultant to 20°C, thereby obtaining an aqueous dispersion liquid C-4 of an encapsulated thermally-latent catalyst (the solid content of which was 20% by mass). The median diameter of the encapsulated thermally-latent catalyst in the resultant aqueous dispersion liquid C-4 of the encapsulated thermally-latent catalyst was 2,500 nm.

<Preparation of solvent-based two-liquid type coating composition>

[Example 2-1]

(Preparation of solvent-based two-liquid type coating composition T-a1)

10.0 parts by mass of an acrylic polyol (manufactured by Allnex, "Setalux 1903" (trade name), the hydroxyl group concentration thereof being 4.5% by mass (relative to resin), and the solid content concentration thereof being 75% by mass), 3.9 parts by mass of the polyisocyanate P-1 obtained in the Synthesis Example 1-1, and 8.3 parts by mass of butyl acetate were mixed and stirred. Then, 0.66 parts by mass of the dispersion liquid C-1SB of the encapsulated thermally-latent catalyst in butyl acetate (the solid content of which was 30% by mass) was added thereto while conducting stirring, followed by stirring the mixture for five minutes to obtain a solvent-based two-liquid type coating composition T-a1.

[Example 2-2 and Comparative Examples 2-1 to 2-3]

(Preparation of solvent-based two-liquid type coating compositions T-a2 and T-b1 to T-b3)

Each solvent-based two-liquid type coating composition was prepared by the same method as that of Example 2-1, except that the constitution and the blended amount were as shown in Table 4.

Table 4

| | | | | Ex. 2-1 | Ex. 2-2 | C. Ex. 2-1 | C. Ex. 2-2 | C. Ex. 2-3 |
|---|---|---|---|---|---|---|---|---|
| Solvent-based two-liquid type coating composition | | | | T-a1 | T-a2 | T-b1 | T-b2 | T-b3 |
| Constitution | Acrylic polyol | Setalux 1903 | parts by mass | 10.0 | 10.0 | 10.0 | 10.0 | 10.0 |
| | Polyisocyanate | P-1 | parts by mass | 3.9 | 3.9 | 3.9 | 3.9 | 3.9 |
| | Solvent | Butyl acetate | parts by mass | 8.3 | 8.3 | 8.9 | 8.7 | 9.0 |
| | Catalyst | C-1SB | parts by mass | 0.66 | - | - | - | - |
| | | C-3SB | parts by mass | - | 0.66 | - | - | - |
| | | U-810 | parts by mass | - | - | 0.06 | - | - |
| | | U-600 | parts by mass | - | - | - | 0.29 | - |
| | Amount of active ingredient of catalyst | Solid content relative to coating material | % by mass | 0.5 | 0.5 | 0.5 | 0.5 | 0 |
| Evaluation | Low-temperature curability | | - | A | A | A | A | C |
| | Storage stability | | - | A | A | C | C | A |
| | Scratch resistance | | - | A | A | C | B | C |

(Ex.: Example; C. Ex.: Comparative Example)

As shown in Table 4, all of the storage stability and the low-temperature curability of the solvent-based two-liquid type coating compositions T-a1 and T-a2 each including an encapsulated thermally-latent catalyst (Examples 2-1 and 2-2), as well as the scratch resistance when made into a coating film were favorable.

In contrast, although the low-temperature curability of the solvent-based two-liquid type coating compositions T-b1 and T-b2 (Comparative Examples 2-1 and 2-2) each in which an unencapsulated catalyst was added was favorable, the storage stability thereof was unfavorable.

In addition, although the storage stability of the solvent-based two-liquid type coating composition T-b3 (Comparative Example 2-3) in which no catalyst was added was favorable, the low-temperature curability thereof and the scratch resistance when made into a coating film were unfavorable.

<Preparation of solvent-based one-liquid type coating composition>

[Example 2-3]

(Preparation of solvent-based one-liquid type coating composition T-a3)

10.0 parts by mass of an acrylic polyol (manufactured by Allnex, "Setalux 1767" (trade name), the hydroxyl group concentration thereof being 4.5% by mass (relative to resin) and the solid content concentration thereof being 65% by mass), 8.7 parts by mass of the blocked polyisocyanate composition BL-1 obtained in the Synthesis Example 2-1, and 2.9 parts by mass of butyl acetate were blended and stirred. Then, 2.8 parts by mass of the dispersion liquid C-3SB of an encapsulated thermally-latent catalyst in butyl acetate (the solid content thereof was 30% by mass) was added to the resultant while conducting stirring, and then the mixture was stirred for five minutes to obtain a solvent-based one-liquid type coating composition T-a3 containing a polyurethane-based hardener.

[Examples 2-4 and 2-5 and Comparative Examples 2-4 and 2-5]

(Preparation of solvent-based one-liquid type coating compositions T-a4 and T-a5 and T-b4 and T-b5)

Each solvent-based one-liquid type coating composition was prepared by the same method as that of Example 2-3, except that the constitution and the blended amounts were as shown in Table 5.

Table 5

| | | | | Ex. 2-3 | Ex. 2-4 | Ex. 2-5 | C. Ex. 2-4 | C. Ex. 2-5 |
|---|---|---|---|---|---|---|---|---|
| Solvent-based one-liquid type coating composition | | | | T-a3 | T-a4 | T-a5 | T-b4 | T-b5 |
| Constitution | Acrylic polyol | Setalux 1767 | parts by mass | 10.0 | 10.0 | 10.0 | 10.0 | 10.0 |
| | Blocked polyisocyanate composition | BL-1 | parts by mass | 8.7 | - | 8.7 | 8.7 | 8.7 |
| | | BL-2 | parts by mass | - | 9.4 | - | - | - |
| | Solvent | Butyl acetate | parts by mass | 2.9 | 3.1 | 3.7 | 4.6 | 4.7 |
| | Catalyst | C-2SB | parts by mass | - | 2.5 | - | - | - |
| | | C-3SB | parts by mass | 2.8 | - | 1.4 | - | - |
| | | U-600 | parts by mass | - | - | - | 0.24 | - |
| | Amount of active ingredient of catalyst | Solid content relative to coating material | % by mass | 2.0 | 2.0 | 1.0 | 2.0 | 0 |
| E | Low-temperature curability | | - | A | A | B | A | C |
| | Storage stability | | - | A | A | A | C | A |
| | Scratch resistance | | - | A | A | B | B | C |

(Ex.: Example; C. Ex.: Comparative Example)

As shown in Table 5, all of the storage stability and the low-temperature curability of the solvent-based one-liquid type coating compositions T-a3 to T-a5 each including a polyurethane-based hardener (Examples 2-3 to 2-5), as well as the scratch resistance when made into a coating film were favorable.

In addition, a tendency was confirmed in which an increase in the amount of the encapsulated thermally-latent catalyst improved the low-temperature curability and the scratch resistance when made into a coating film as a result

of a comparison with the solvent-based one-liquid type coating compositions T-a3 and T-a5 in which the amounts of the encapsulated thermally-latent catalyst were different from each other (Examples 2-3 and 2-5).

In contrast, although the low-temperature curability of the solvent-based one-liquid type coating composition T-b4 in which the unencapsulated catalyst was added (Comparative Example 2-4) was favorable, the storage stability thereof was unfavorable.

In addition, although the storage stability of the solvent-based one-liquid type coating composition T-b5 in which no catalyst was added (Comparative Example 2-5) was favorable, the low-temperature curability thereof and the scratch resistance when made into a coating film were unfavorable.

<Preparation of aqueous one-liquid type coating composition>

[Example 2-6]

(Preparation of aqueous one-liquid type coating composition T-a6)

2.8 parts by mass of ion-exchanged water and 0.5 parts by mass of a surfactant (manufactured by Nippon Nyukazai Co., Ltd., under the trade name of "NewCoal 2320-SN") (hereinafter, may be abbreviated as "N2320-SN") were added and then stirred with a stirrer. 6.0 parts by mass of the blocked polyisocyanate BL-3 prepared in the Synthesis Example 2-3 was added thereto while conducting stirring. Five minutes after, 10.0 parts by mass of an acrylic dispersion (manufactured by Allnex, "SETAQUA 6515" (trade name), the hydroxyl group concentration thereof was 3.3% by mass (relative to resin), and the solid content concentration thereof was 45% by mass) was further added to the resultant while conducting stirring. Then, 1.95 parts by mass of an aqueous dispersion liquid C-3 of an encapsulated thermally-latent catalyst (the solid content thereof was 30% by mass) was added thereto while conducting stirring to obtain an aqueous one-liquid type coating composition T-a6 including a polyurethane-based hardener.

[Examples 2-7 and 2-8 and Comparative Examples 2-6 to 2-9]

(Preparation of aqueous one-liquid type coating compositions T-a7 and T-a8 and T-b6 to T-b9)

Each one-liquid type coating composition was prepared by the same method as that of Example 2-6 except that the constitution and the blended amounts were as shown in Table 6.

Table 6

| | | | Ex. 2-6 | Ex. 2-7 | Ex. 2-8 | C. Ex. 2-6 | C. Ex. 2-7 | C. Ex. 2-8 | C. Ex. 2-9 |
|---|---|---|---|---|---|---|---|---|---|
| Aqueous one-liquid type coating composition | | | T-a6 | T-a7 | T-a8 | T-b6 | T-b7 | T-b8 | T-b9 |
| Ion-exchanged water | | parts by mass | 2.8 | 3.0 | 3.5 | 4.2 | 4.2 | 4.2 | 2.0 |
| Surfactant | N2320-SN | parts by mass | 0.5 | 0.5 | 0.5 | 0.5 | 0.5 | 0.5 | 0.5 |
| Blocked polyisocyanate composition | BL-3 | parts by mass | 6.0 | 6.0 | 6.0 | 6.0 | 6.0 | 6.0 | 6.0 |
| Acrylic polyol | Setaqoa 6515 | parts by mass | 10.0 | 10.0 | 10.0 | 10.0 | 10.0 | 10.0 | 10.0 |
| Catalyst | C-2 | parts by mass | - | 1.77 | - | - | - | - | - |
| | C-3 | parts by mass | 1.95 | - | 0.98 | - | - | - | - |

(continued)

| | | | Ex. 2-6 | Ex. 2-7 | Ex. 2-8 | C. Ex. 2-6 | C. Ex. 2-7 | C. Ex. 2-8 | C. Ex. 2-9 |
|---|---|---|---|---|---|---|---|---|---|
| | U-810 | parts by mass | - | - | - | 0.17 | - | - | - |
| | U-600 | parts by mass | - | - | - | - | 0.17 | - | - |
| | C-4 | parts by mass | - | - | - | - | - | - | 2.93 |
| Amount of active ingredient of catalyst | Solid content relative to coating material | % by mass | 2.0 | 2.0 | 1.0 | 2.0 | 2.0 | 0.0 | 2.0 |
| Curability | | - | A | A | B | C | B | C | B |
| Storage stability | | - | A | A | A | A | B | A | A |
| Scratch resistance | | - | A | A | B | C | C | C | C |
| (Ex.: Example; C. Ex.: Comparative Example) | | | | | | | | | |

As shown in Table 6, all of the storage stability and the low-temperature curability of the aqueous one-liquid type coating compositions T-a6 to T-a8 each including a polyurethane-based hardener (Examples 2-6 to 2-8), as well as the scratch resistance when made into a coating film were favorable.

In addition, a tendency was confirmed in which an increase in the amount of the encapsulated thermally-latent catalyst improved the low-temperature curability and the scratch resistance when made into a coating film as a result of a comparison with the aqueous one-liquid type coating compositions T-a6 and T-a8 in which the amounts of the encapsulated thermally-latent catalyst were different from each other (Example 2-6 and 2-8).

In contrast, although the storage stability of the aqueous one-liquid type coating composition T-b6 in which an unencapsulated catalyst (U-810) was added (Comparative Example 2-6) was favorable, the low-temperature curability thereof and the scratch resistance when made into a coating film were unfavorable. In addition, although the storage stability and the low-temperature curability of the aqueous one-liquid type coating composition T-b7 in which an unencapsulated catalyst (U-600) was added (Comparative Example 2-7) was approximately acceptable, the scratch resistance when made into a coating film was unfavorable.

In addition, although the storage stability of the aqueous one-liquid type coating composition T-b8 in which no catalyst was added (Comparative Example 2-8) was favorable, the low-temperature curability thereof and the scratch resistance when made into a coating film were unfavorable.

In addition, although the storage stability of the aqueous one-liquid type coating composition T-b9 in which a catalyst encapsulated with an acrylic polymer film was used (Comparative Example 2-9) was favorable, the dispersibility of the encapsulated catalyst in the aqueous coating material was insufficient and the low-temperature curability thereof was deteriorated, and, since the catalyst was not encapsulated with a urea film, the scratch resistance was unfavorable.

INDUSTRIAL APPLICABILITY

The polyurethane-based hardener of the present embodiment makes it possible to provide a coating composition having excellent storage stability and low-temperature curability, and to provide a coating film having excellent scratch resistance. The coating composition of the present embodiment includes the above-mentioned polyurethane-based hardener, has excellent storage stability and low-temperature curability, and can form a coating film having excellent scratch resistance. The coating composition of the present embodiment is preferably used as a primer, intermediate, or upper coating material to be applied on a material such as metal, plastic, or inorganic material. The coating composition of the present embodiment is preferably used to impart an aesthetically pleasing appearance, weather resistance, acid resistance, rust resistance, chipping resistance, adhesiveness, or the like, to a precoat metal such as an anti-rust steel plate, a vehicle coated part, a plastic-coated part, or the like. The coating composition of the present embodiment is also useful as a urethane raw material of an adhesive, tackifier, elastomer, foam, surface-treating agent, or the like.

## Claims

1. A polyurethane-based hardener comprising:

   a first polyisocyanate; and
   an encapsulated thermally-latent catalyst coated with a polyurea film derived from a polyamine compound and a second polyisocyanate.

2. The polyurethane-based hardener according to claim 1, wherein the encapsulated thermally-latent catalyst consists of a metal compound coated with the polyurea film.

3. The polyurethane-based hardener according to claim 1 or 2, wherein the first polyisocyanate is a blocked polyisocyanate derived from a polyisocyanate and a blocking agent.

4. The polyurethane-based hardener according to claim 1 or 2, wherein the first polyisocyanate is a hydrophilic blocked polyisocyanate derived from a polyisocyanate, a hydrophilic compound and a blocking agent.

5. A kit of a two-liquid type coating composition, comprising: a polyurethane-based hardener of claim 1 or 2; and a polyvalent active hydrogen-containing compound.

6. A solvent-based one-liquid type coating composition, comprising: a polyurethane-based hardener of claim 3; and a polyvalent active hydrogen-containing compound.

7. An aqueous one-liquid type coating composition, comprising: the polyurethane-based hardener of claim 4; and a polyvalent active hydrogen-containing compound.

8. A coating film formed by curing a two-liquid type coating composition, comprising: the polyurethane-based hardener of claim 1 or 2; and a polyvalent active hydrogen-containing compound.

9. A coating film formed by curing a solvent-based one-liquid type coating composition of claim 6.

10. A coating film formed by curing the aqueous one-liquid type coating composition of claim 7.

11. A coated article comprising a coating film of any one of claims 8 to 10.

12. An encapsulated thermally-latent catalyst coated with a polyurea film derived from a polyamine compound and a second polyisocyanate.

13. The encapsulated thermally-latent catalyst according to claim 12, wherein the encapsulated thermally-latent catalyst consists of a metal compound coated with the polyurea film.

14. The encapsulated thermally-latent catalyst according to claim 12 or 13, wherein the second polyisocyanate is a water-dispersible polyisocyanate.

15. A method for producing an encapsulated thermally-latent catalyst, comprising:

   a step in which a mixture is prepared by mixing a polyamine compound and a metal compound;
   a step in which a dispersion liquid is prepared by dispersing the mixture in water; and
   a step in which a water-dispersible polyisocyanate is added dropwise into the dispersion liquid to form a polyurea film derived from the polyamine compound and the water-dispersible polyisocyanate by an interfacial polymerization method to coat the metal compound with the polyurea film.

## INTERNATIONAL SEARCH REPORT

International application No.
**PCT/JP2021/032462**

**A. CLASSIFICATION OF SUBJECT MATTER**

***C09D 175/04***(2006.01)i; ***C08G 18/22***(2006.01)i; ***C08G 18/32***(2006.01)i; ***C08G 18/80***(2006.01)i; ***C09D 7/61***(2018.01)i; ***C09D 7/65***(2018.01)i
FI: C08G18/22; C08G18/32 025; C08G18/32 071; C08G18/80; C09D175/04; C09D7/65; C09D7/61

According to International Patent Classification (IPC) or to both national classification and IPC

**B. FIELDS SEARCHED**

Minimum documentation searched (classification system followed by classification symbols)

C09D175/04; C08G18/22; C08G18/32; C08G18/80; C09D7/61; C09D7/65

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 10-168285 A (NITTO DENKO CORP.) 23 June 1998 (1998-06-23)<br>claim 1, paragraphs [0007], [0022], [0023], [0032], [0033], [0057],[0058], [0090] | 12-15<br>1-11 |
| Y | JP 4-332780 A (DAINIPPON INK & CHEMICALS INC.) 19 November 1992 (1992-11-19)<br>claim 1, paragraphs, [0065], [0073], [0092]-[0095] | 1-11 |
| Y | JP 63-178173 A (AISIN CHEMICAL CO., LTD.) 22 July 1988 (1988-07-22)<br>claims, page 2, lower left column, lines 1-3 | 1-11 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 September 2021** | **12 October 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2021/032462**

| Patent document cited in search report | Publication date (day/month/year) | Patent family member(s) | Publication date (day/month/year) |
|---|---|---|---|
| JP 10-168285 A | 23 June 1998 | (Family: none) | |
| JP 4-332780 A | 19 November 1992 | (Family: none) | |
| JP 63-178173 A | 22 July 1988 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2020164749 A
- WO 2017182429 A
- JP 5894919 B
- JP 6165152 B
- JP 6404826 B
- JP 57034107 A
- JP 61275311 A